(19) Europäisches Patentamt
European Patent Office
Office européen des brevets

(11) **EP 4 456 625 A1**

(12) **EUROPEAN PATENT APPLICATION**
published in accordance with Art. 153(4) EPC

(43) Date of publication:
**30.10.2024 Bulletin 2024/44**

(21) Application number: **22910067.2**

(22) Date of filing: **21.12.2022**

(51) International Patent Classification (IPC):
**H04W 64/00** (2009.01)

(52) Cooperative Patent Classification (CPC):
**H04W 4/02; H04W 64/00**

(86) International application number:
**PCT/CN2022/140654**

(87) International publication number:
**WO 2023/116755 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 CN 202111600081**

(71) Applicant: VIVO MOBILE COMMUNICATION CO., LTD.
**Dongguan, Guangdong 523863 (CN)**

(72) Inventors:
• LI, Jianzhi
  **Dongguan, Guangdong 523863 (CN)**
• JIANG, Dajie
  **Dongguan, Guangdong 523863 (CN)**
• YUAN, Yannan
  **Dongguan, Guangdong 523863 (CN)**
• WU, Jianming
  **Dongguan, Guangdong 523863 (CN)**
• YAO, Jian
  **Dongguan, Guangdong 523863 (CN)**
• DING, Shengli
  **Dongguan, Guangdong 523863 (CN)**

(74) Representative: Lavoix
**Bayerstraße 83**
**80335 München (DE)**

(54) **POSITIONING SENSING METHOD AND APPARATUS, SENSING MEASUREMENT METHOD AND APPARATUS, AND TERMINAL AND NETWORK-SIDE DEVICE**

(57) This application relates to the field of communications technologies, and discloses a positioning sensing method and apparatus, a sensing measurement method and apparatus, a terminal, and a network-side device. The positioning sensing method of embodiments of this application includes: obtaining, by a computing node, a sensing measurement quantity result, where the sensing measurement quantity result is obtained by performing, by a sensing node, signal processing on a first signal that is sent by the sensing node itself and that is reflected by a to-be-sensed target; and determining, by the computing node, a positioning sensing result of the to-be-sensed target based on the sensing measurement quantity result.

A computing node obtains a sensing measurement quantity result, where the sensing measurement quantity result is obtained by performing, by a sensing node, signal processing on a first signal that is sent by the sensing node itself and that is reflected by a to-be-sensed target — 401

The computing node determines a positioning sensing result of the to-be-sensed target based on the sensing measurement quantity result — 402

FIG. 4

**Description**

**CROSS-REFERENCE TO RELATED APPLICATIONS**

This application claims priority to Chinese Patent Application No. 202111600081.5 filed on December 24, 2021, which is incorporated herein by reference in its entirety.

**TECHNICAL FIELD**

This application relates to the field of communications technologies, and specifically, to a positioning sensing method and apparatus, a sensing measurement method and apparatus, a terminal, and a network-side device.

**BACKGROUND**

In the related technology, a radar signal is used to sense and position a to-be-positioned target without a communication function, and the sensing distance of radar sensing is limited. To position to-be-positioned targets in different positions or trace a movement track of a to-be-positioned target in movement, it is necessary to arrange radar sensing apparatuses in positions. As a result, the range of application of a radar positioning system is limited.

**SUMMARY**

Embodiments of this application provide a positioning sensing method and apparatus, a sensing measurement method and apparatus, a terminal, and a network-side device, to use a sensing device to perform sensing measurement on a signal that is sent by the sensing device itself and that is reflected by only a to-be-sensed target, to position the to-be-sensed target without a communication function.

According to a first aspect, a positioning sensing method is provided. The method includes:

obtaining, by a computing node, a sensing measurement quantity result, where the sensing measurement quantity result is obtained by performing, by a sensing node, signal processing on a first signal that is sent by the sensing node itself and that is reflected by a to-be-sensed target; and

determining, by the computing node, a positioning sensing result of the to-be-sensed target based on the sensing measurement quantity result.

According to a second aspect, a positioning sensing apparatus is provided, applied to a computing node. The positioning sensing apparatus includes:

a first obtaining module, configured to obtain a sensing measurement quantity result, where the sensing measurement quantity result is obtained by performing, by a sensing node, signal processing on a first signal that is sent by the sensing node itself and that is reflected by a to-be-sensed target; and

a first determining module, configured to determine a positioning sensing result of the to-be-sensed target based on the sensing measurement quantity result.

According to a third aspect, a sensing measurement method is provided. The method includes:

obtaining, by a sensing node, configuration parameter information;

sending, by the sensing node, a first signal according to the configuration parameter information; and

determining, by the sensing node, a sensing measurement quantity result based on the first signal that is sent by the sensing node itself and that is reflected by a to-be-sensed target, where a positioning sensing result of the to-be-sensed target is determined based on the sensing measurement quantity result.

According to a fourth aspect, a sensing measurement apparatus is provided, applied to a sensing node. The sensing measurement apparatus includes:

a fourth obtaining module, configured to obtain configuration parameter information;

a first sending module, configured to send a first signal according to the configuration parameter information; and

a third determining module, configured to determine a sensing measurement quantity result based on the first signal that is sent by the first sending module itself and that is reflected by a to-be-sensed target, where a positioning sensing result of the to-be-sensed target is determined based on the sensing measurement quantity result.

According to a fifth aspect, a terminal is provided. The terminal includes a processor and a memory, where the memory stores a program or instructions runnable on the processor, and when being executed by the processor, the program or the instructions implement the steps of the method according to the third aspect.

According to a sixth aspect, a terminal is provided, including a processor and a communication interface, where the communication interface is configured to obtain configuration parameter information, send a first signal according to the configuration parameter information, and determine a sensing measurement quantity result based on the first signal that is sent by the communication interface itself and that is reflected by a to-be-sensed target, where a positioning sensing result of the to-be-sensed target is determined based on the sensing measurement quantity result.

According to a seventh aspect, a network-side device is provided. The network-side device includes a processor and a memory, where the memory stores a program or instructions runnable on the processor, and when being executed by the processor, the program or the instructions implement the steps of the method according to the first aspect or the third aspect.

According to an eighth aspect, a network-side device is provided, including a processor and a communication interface, where the communication interface is configured to obtain a sensing measurement quantity result, where the sensing measurement quantity result is obtained by performing, by a sensing node, signal processing on a first signal that is sent by the sensing node itself and that is reflected by a to-be-sensed target, and the processor is configured to determine a positioning sensing result of the to-be-sensed target based on the sensing measurement quantity result; or

the communication interface is configured to obtain configuration parameter information, send a first signal according to the configuration parameter information, and determine a sensing measurement quantity result based on the first signal that is sent by the communication interface itself and that is reflected by a to-be-sensed target, where a positioning sensing result of the to-be-sensed target is determined based on the sensing measurement quantity result.

According to a ninth aspect, a wireless sensing system is provided and includes: a terminal and a network-side device, the terminal can be configured to perform the steps of the sensing measurement method according to the third aspect, and the network-side device can be configured to perform the steps of the positioning sensing method according to the first aspect; or the terminal and one part of the network-side device are configured to perform the steps of the sensing measurement method described above, and the other part of the network-side device can be configured to perform the steps of the positioning sensing method described above.

According to a tenth aspect, a readable storage medium is provided. The readable storage medium stores a program or instructions, and the program or the instructions, when being executed by a processor, implement the steps of the method according to the first aspect or implement the steps of the method according to the third aspect.

According to an eleventh aspect, a chip is provided. The chip includes a processor and a communication interface, the communication interface is coupled to the processor, and the processor is configured to run a program or instructions to implement the method according to the first aspect or implement the method according to the third aspect.

According to a twelfth aspect, a computer program product is provided. The computer program product is stored in a storage medium, and the computer program product is executed by at least one processor to implement the steps of the positioning sensing method according to the first aspect or the steps of the sensing measurement method according to the third aspect.

In the embodiments of this application, obtaining, by a computing node, a sensing measurement quantity result, where the sensing measurement quantity result is obtained by performing, by a sensing node, signal processing on a first signal that is sent by the sensing node itself and that is reflected by a to-be-sensed target; and determining, by the computing node, a positioning sensing result of the to-be-sensed target based on the sensing measurement quantity result. In a sensing measurement process, all sensing measurement quantity results such as the angle and the power of the reflected signal that is reflected by the to-be-sensed target and that is received by the sensing node may adaptively change with the position, the movement speed, the movement direction, and the like of the to-be-sensed target. In this way, the computing node may perform calculation based on the sensing measurement quantity results measured and reported by the sensing node, to obtain positioning sensing results such as the position, the movement speed, the movement direction, and the movement track of the to-be-sensed target. Given that the sensing node may be any device that can receive the first signal sent by the sensing node itself and reflected by the to-be-sensed target, such as a base station, a terminal, a small cell, and a wireless sensing device that are existing, a communication device and a sensing device that are existing may be reused to perform wireless sensing positioning on the to-be-sensed target without a communication function, to improve the positioning sensing application range.

## BRIEF DESCRIPTION OF THE DRAWINGS

FIG. 1 is a schematic structural diagram of a wireless communication system to which an embodiment of this application is applicable;

FIG. 2 is a diagram of an NR positioning architecture in the related technology;

FIG. 3 is a diagram of a functional separation architecture of an NG-RAN in the related technology;

FIG. 4 is a flowchart of a positioning sensing method according to an embodiment of this application;

FIG. 5 is a first diagram of an application scenario according to an embodiment of this application;

FIG. 6 is a second diagram of an application scenario according to an embodiment of this application;

FIG. 7 is a schematic diagram of determining an initial position of a track of a to-be-sensed target based on an AOA/AOD of a dynamic reflection path according to an embodiment of this application;

FIG. 8 is a schematic diagram of a sensing sub-area according to an embodiment of this application;

FIG. 9 is a flowchart of a sensing measurement method according to an embodiment of this application;

FIG. 10 is a schematic structural diagram of a positioning sensing apparatus according to an embodiment of this application;

FIG. 11 is a schematic structural diagram of a sensing measurement apparatus according to an embodiment of this application;

FIG. 12 is a schematic structural diagram of a communication device according to an embodiment of this application;

FIG. 13 is a schematic structural diagram of a terminal according to an embodiment of this application;

FIG. 14 is a schematic structural diagram of a network-side device according to an embodiment of this application; and

FIG. 15 is a schematic structural diagram of another network-side device according to an embodiment of this application.

## DETAILED DESCRIPTION

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application fall within the protection scope of this application.

The specification and claims of this application, and terms "first" and "second" are used to distinguish similar objects, but are not used to describe a specific sequence or order. It should be understood that, the terms used in this way is exchangeable in a proper case, so that the embodiments of this application can be implemented in another order except those shown or described herein. In addition, objects distinguished by "first" and "second" are generally of one type, and the quantity of objects is not limited. For example, there may be one or more first objects. In addition, "and/or" in this specification and the claims represents at least one of the connected objects. The character "/" usually indicates an "or" relationship between associated objects.

It is worth pointing out that, the technologies described in the embodiments of this application are not limited to the Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-Carrier Frequency Division Multiple Access (Single-Carrier Frequency Division Multiple Access, SC-FDMA), and other systems. The terms "system" and "network" may be used interchangeably in the embodiments of this application. The described technologies can be applied to the systems and radio technologies mentioned above, and can also be applied to other systems and radio technologies. The new radio (New Radio, NR) system is described in the following descriptions for the purpose of exemplification, and the NR terms are used in most of the following descriptions, but the technologies may also be applied to applications other than NR system applications, such as the 6th Generation (6th Generation, 6G) communication system.

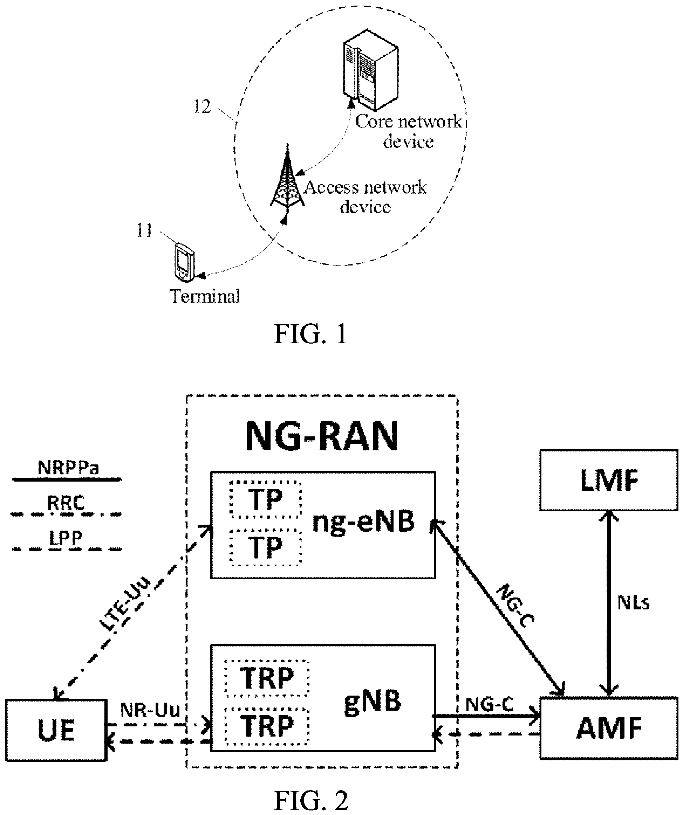

FIG. 1 shows a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home appliance (a home device having a wireless communication function, for example, a refrigerator, a television, a washing machine, or furniture), a game console, a personal computer (personal computer, PC), a teller machine, or a self-service machine. The wearable device includes: a smart watch, a smart band, a smart headset, smart glasses, a smart jewelry (a smart bangle, a smart bracelet, a smart ring, a smart necklace, a smart anklet bracelet, a smart anklet chain, or the like), a smart wristband, a smart costume, or the like. It should be noted that the specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another proper term in the field. As long as a same technical effect is achieved, the base station is not limited to a specific technical term. It should be noted that only a base station in an NR system is used as an example in the embodiments of this application for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that only a core network device in an NR system is used as an example in the embodiments of this application for description, but a specific type of the core network device is not limited.

Accurate and real-time position information is an important demand for various new network services, such as emergency services, Internet of Vehicles, and Industrial Internet of Things (IIoT), and the like. Research on positioning technologies has been carried out for many years, and a position of a device can be estimated by measuring a cellular radio signal by a wireless device. In recent years, due to the expectation of higher positioning accuracy in NR networks, and the emergence of more new use cases, researchers have become more interested in using cellular technologies for positioning. Positioning schemes typically rely on a time-based technology, an angle-based technology, or a hybrid technology. In the 16th public protocol version (Release 16, R16) of the 3rd Generation Partnership Project (3rd Generation Partnership Project, 3GPP), the LTE positioning function has been further expanded in NR, which benefits from various enabling factors ofNR, such as larger bandwidth, higher frequency, more antennas, and low latency and flexible network architecture. The 5G positioning architecture is based on the LTE positioning architecture, and additional modifications have been made after the introduction of new logical nodes in the 5G core network (5G Core, 5GC).

The positioning architecture of the next generation radio access network (Next Generation Radio Access Network, NG-RAN) in 3GPP R16 is shown in FIG. 2. This architecture is suitable for positioning a terminal accessed by a transmission reception point (Transmission Reception Point, TRP) of an NR gNB or a transmission point (Transmission Point, TP) of an enhanced Evolved Universal Terrestrial Radio Access Network (Evolved Universal Terrestrial Radio Access Network, E-UTRAN) (that is, LTE ng-eNB).

As shown in FIG. 2, signaling between different entities in the 5G positioning architecture has its own protocol requirements. The gNB (gNB-CU)/ng-eNB exchanges necessary positioning and measurement information with a location management function (Location Management Function, LMF) in the 5GC through the New Radio Positioning Protocol Annex (New Radio Positioning Protocol Annex, NRPPa) protocol. In LTE, positioning support between a terminal and a position server is handled by the LTE Positioning Protocol (LTE Positioning Protocol, LPP). This protocol has been extended in NR to support signaling interaction between a UE and the LMF. In addition, the terminal receives necessary radio configuration information from the NG-RAN node through radio resource control (Radio Resource Control, RRC) through the NR-Uu or LTE-Uu interface. By reusing the LPP protocol in NR, 4G and 5G can be extended in common protocols. Both the NRPPa protocol and the LPP protocol are transmitted on the control plane of the NG interface (NG-C) through the Access and Mobility Management Function (Access and Mobility Management Function, AMF).

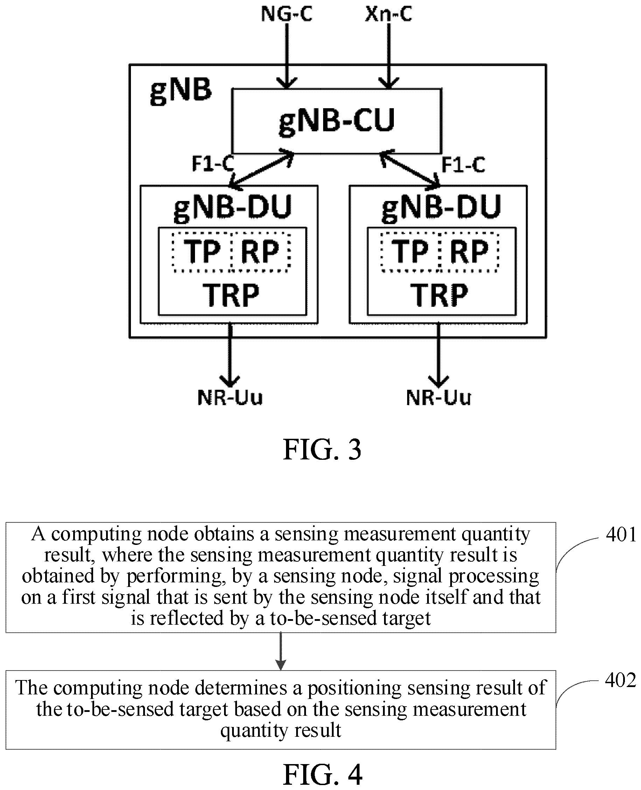

FIG. 3 further shows a functional separation architecture of an R16 Next Generation Radio Access Network (NG-RAN). In the gNB function separation, the NG-RAN includes a gNB central unit (Central Unit, CU) and one or more gNB distributed units (Distributed Unit, DU), which communicate through the F1 interface, and the gNB-CU can be connected to one or more gNB-DUs that carry a transmission point TP/reception point (Reception Point, RP)/transmission reception point TRP.

Currently, positioning methods supported in 3GPP R16 include: a Downlink Time Difference of Arrival (Downlink Time Difference of Arrival, DL-TDOA) method, an Uplink Time Difference of Arrival (Uplink Time Difference of Arrival, UL-TDOA) method, Multi-Cell Round Trip Time (Multi-Cell Round Trip Time, Multi-RTT) method, a Downlink Angle of Departure (Downlink Angle of Departure, DL-AOD) method, Uplink Angle of Arrival (Uplink Angle of Arrival, UL-AOA) method, and an Enhanced Cell ID (Enhanced Cell ID, E -CID) method.

The DL-TDOA and UL-TDOA methods have been applied in the LTE era. DL-TDOA uses a downlink positioning reference signal (Down Link-Positioning Reference Signal, DL-PRS). The UE receives DL-PRSs delivered by different cells and measures a Reference Signal Time Difference (Reference Signal Time Difference, RSTD) and reports it to the LMF, and the LMF calculates the position of the UE according to known position information of a base station. UL-TDOA uses an Uplink Sounding Reference Signal (Up Link-Sounding Reference Signal, UL-SRS). Base stations in different cells receive the relative time of arrival (Relative Time Of Arrival, RTOA) sent by the UE and report it to the LMF, and the LMF calculates the position of the UE according to known position information of the base stations. In addition to the above two methods, Multi-RTT, DL-AOD, and UL-AOA are relatively new positioning methods in NR.

In the Multi-RTT method, a base station sends a DL-PRS reference signal in downlink, and the UE sends a UL-SRS signal in uplink. The base station configures the UL-SRS for the UE through the RRC protocol, and the LMF configures the DL-PRS for the UE through the LPP protocol. The UE reports the measurement result to the LMF through the LPP protocol, and the base station reports the UE position information estimate to the LMF through the NRPPa protocol.

In the DL-AOD method, a base station sends a DL-PRS beam in downlink, the UE measures the corresponding Reference Signal Received Power (Reference Signal Received Power, RSRP) and reports the measurement result to the LMF through the LPP protocol, and the base station sends angle information of the DL-PRS beam to the LMF through the NRPPa protocol.

In the UL-AOA method, a base station TRP reports the AOA measurement result and some other configuration information such as TRP coordinates and beam configuration information to the LMF through NRPPa; and the LMF calculates the UE position estimation result based on the above information.

In addition, the above method can be used in combination with other methods (or measurement processes corresponding to other methods) to further improve positioning accuracy. For example, DL-TDOA is combined with DL-AOD, or UL-TDOA is combined with UL-AOA, or multi-RTT is combined with downlink PRS-RSRP measurement or uplink SRS-RSRP and AOA measurement.

A DL-PRS resource occupies multiple consecutive Orthogonal Frequency Division Multiplex (Orthogonal Frequency Division Multiplex, OFDM) symbols in the time domain, and multiple consecutive Physical Resource Blocks (Physical Resource Block, PRB) in the frequency domain, and the multiplexing of multiple different DL-PRS resources on different subcarriers is supported in a combing method. A DL-PRS sequence is a pseudorandom sequence (Gold sequence), an initial value of a generated sequence of which is a function of a PRS sequence ID, a slot index, and a symbol index. A starting PRB and bandwidth in the frequency domain of a DL-PRS are configured through a higher layer. The granularity of a starting PRB configuration parameter is one PRB, the granularity of bandwidth configuration is 4 PRBs, and the configurable bandwidth ranges from 24 to 272 PRBs. All PRS resources in one DL PRS resource set have the same starting PRB and bandwidth. Patterns of resource elements (Resource Elements, REs) of DL-PRS resources are staggered in the time domain and support periodic transmission.

Although the UL-SRS for positioning and the SRS for communication have similarities (based on the communication signaling sequence (Zadoff-chu, ZC) sequence), they are configured separately in the network. The UL-SRS for positioning can start at any symbol in the uplink slot, and can occupy 1, 2, 4, 8, or 12 consecutive OFDM symbols in the time domain to provide sufficient coverage to ensure that all associated TRPs can receive the symbols. To reduce the collision and uplink interference between positioning SRS signals sent by different UEs, the number of sequence identifiers of UL-SRS is increased by 64 times compared with that of sequence identifiers of NR SRS. The frequency domain comb configuration of UL-SRS can be configured as 8, and the power not including the positioning signal can be borrowed to obtain an increase in power spectrum density, to improve the received signal to interference plus noise ratio (Signal to Interference plus Noise Ratio, SINR) of the SRS positioning signal. In addition, UL-SRS adopts the design of staggered patterns to reduce a side lobe value generated by a correlation operation during sequence detection.

It can be seen from the above that in the NR positioning method in the related art, only when the to-be-positioned target has communication capabilities, to enable the to-be-positioned target to measure the received signal and/or send the signal, the TRP, the RP, the TP, or the like for positioning the to-be-positioned target can determine the position information of the to-be-positioned target according to the transmission delay, transmission power, or the like between the TRP, the RP, the TP, or the like and the to-be-positioned target.

However, in the embodiments of this application, a sensing node can be used to position a communication device that does not have communication capabilities or does not send or receive a signal during positioning. In this way, vehicles, pedestrians, or other objects/animals can be positioned, thereby expanding the range of to-be-positioned targets that can be positioned.

In addition, it is worth noting that in related technologies, sensing and communication systems are usually designed separately and occupy different frequency bands. Due to the widespread deployment of millimeter waves and massive Multi Input Multi Output (Multi Input Multi Output, MIMO) technologies, communication signals in future wireless communication systems often have high resolution in both the time domain and the angle domain, which makes it possible to implement high-precision sensing with the communication signals. Therefore, it is better to jointly design sensing and communication systems, so that they can share the same frequency band and hardware to improve frequency efficiency and reduce hardware cost. This has prompted research on Integrated Sensing And Communication (Integrated Sensing And Communication, ISAC).

Although wireless communication and radar sensing (Communication & Sensing, C&S) have been developing in parallel, the intersection is limited. They have a lot in common in terms of signal processing algorithms, devices, and system architectures to a certain extent. In recent years, the coexistence, collaboration, and joint design of these two systems have attracted more and more attention from researchers.

The coexistence of communication systems and radar systems has been studied extensively in the early days, with a focus on developing effective interference management technologies to enable two separately deployed systems to operate smoothly without interfering with each other. Although radar and communication systems may be co-located, or even physically integrated, they transmit two different signals in the time/frequency domain. They collaborate to share the same resources to minimize interference with each other when working simultaneously. Corresponding measures include beamforming, collaborative spectrum sharing, primary and secondary spectrum sharing, and dynamic coexistence. However, effective interference cancellation usually has strict requirements on node mobility and information exchange between nodes, so the improvement of spectrum efficiency is actually relatively limited. Since interference in a coexistence system is caused by transmitting two separate signals, it is natural to ask whether one transmitted signal can be used for performing communication and radar sensing simultaneously. Radar systems often use specially designed waveforms, such as short pulses and chirps, that can implement high power radiation and simplify receiver processing. However, these waveforms are not necessary for radar detection, and a good example is passive radar or passive sensing where different radio signals are used as sensing signals.

Machine learning especially deep learning technologies further advance the potential of non-dedicated radio signals for radar sensing. With these technologies, conventional radar is moving towards more general wireless sensing. Wireless sensing herein can broadly refer to retrieving information from a received radio signal, rather than performing modulation on a transmitter to obtain communication data of a signal. For wireless sensing related to a position of a to-be-sensed target, a target signal reflection delay, an Angle of Arrival (Angle of Arrival, AOA), an Angle of Departure (Angle of Departure, AOD), Doppler parameters, and other dynamic parameters can be estimated through commonly used signal processing methods. Physical characteristics of the to-be-sensed target can be implemented by measuring an inherent pattern signal of a device, an object, or a living thing. The two sensing methods can be called sensing parameter estimation and pattern recognition respectively. In this sense, wireless sensing refers to more general sensing technologies and applications that use radio signals.

ISAC has the potential to integrate wireless sensing into large-scale mobile networks, referred to herein as Perceptive Mobile Networks (Perceptive Mobile Networks, PMNs). PMN can evolve from the current 5G mobile network and is expected to become a ubiquitous wireless sensing network while providing stable and high-quality mobile communication services. It can be built on the existing mobile network infrastructure without major changes to the network structure and device. It will unleash the maximum capacity of the mobile network and avoid the high cost of infrastructure to additionally build a new wide-area wireless sensing network separately. With increased coverage, integrated communication and sensing capabilities are expected to enable many new applications. A perceptive mobile network is capable of providing both communication and wireless sensing services, and has the potential to become a ubiquitous wireless sensing solution due to its large broadband coverage and robust infrastructure. Its joint coordinated communication and sensing capabilities will increase the productivity of our society and help enable a lot of new applications that cannot be effectively enabled by existing sensor networks. Some early work using mobile signals for passive sensing has demonstrated its potential. Examples include traffic monitoring, weather forecasting, and remote sensing of rainfall based on radio signals of Global System for Mobile Communications (Global System for Mobile Communications, GSM). The perceptive mobile network can be widely applied to communication and sensing in transportation, communication, energy, precision agriculture, and security fields, while existing solutions are either infeasible or inefficient. It can further provide complementary sensing capabilities to existing sensor networks, has a unique day and night operating function, and can see through fog, foliage, and even solid objects. Some common sensing services are shown in Table 1 below:

Table 1

| Physical range of sensing | Real-time performance requirement of sensing | Sensing function | Application |
|---|---|---|---|
| Large | Intermediate | Weather, air quality, and the like | Meteorology, agriculture, and life services |

(continued)

| Physical range of sensing | Real-time performance requirement of sensing | Sensing function | Application |
|---|---|---|---|
| Large | Intermediate | Vehicle flow (road) and people flow (metro station) | Smart city, intelligent transportation, and commercial service |
| Large | Intermediate | Animal activity, migration, and the like | Animal husbandry, ecological environment protection, and the like |
| Large | High | Target tracing, distance measurement, speed measurement, and angle measurement | Many application scenarios of a conventional radar, vehicular wireless communication technology (vehicle to X, V2X), and the like |
| Large | Low | Three-dimensional map building | Navigation and smart city |
| Small | High | Action and gesture recognition | Intelligent interaction, gaming, and smart home of smartphones |
| Small | High | Heartbeat/breathing and the like | Health supervision and medical treatment |
| Small | Intermediate | Imaging | Safety inspection and logistics |
| Small | Low | Material quality | Construction, manufacturing, exploration, and the like |

However, in the embodiments of this application, an ISAC-based positioning sensing method and sensing measurement method are provided to use sensing nodes with signal transmitting and receiving capabilities to participate in the collaborative sensing of a to-be-sensed target, and to determine a positioning sensing result of the to-be-sensed target according to a sensing measurement quantity result of measuring and reporting, by each sensing node, a signal reflected by the to-be-sensed target. Moreover, the embodiments of the present application do not limit that the sensing node needs to be a radar device in the related art, and it may also be a terminal, a base station, a small cell, a sensing device, or the like that has the ability to transmit and receive signals and is able to perform any measurement process such as Doppler frequency measurement, angle of arrival power spectrum (Angle Power Spectrum, APS) (or uplink signal angle of departure power spectrum) measurement, or angle of arrival/angle of departure delay power spectrum (Angle Delay Power Spectrum, ADPS) measurement, so it can reuse existing terminals, base stations, small cells, sensing devices, and the like to implement collaborative sensing positioning of the to-be-sensed target.

A positioning sensing method, a sensing measurement method, a positioning sensing apparatus, a sensing measurement apparatus, a terminal, and a network-side device provided in the embodiments of this application is described in detail below with reference to the accompanying drawings by using some embodiments and application scenarios thereof.

Referring to FIG. 4, a positioning sensing method provided in an embodiment of this application may be executed by a computing node, and the computing node may include a core network (for example, a sensing network function/sensing network element in the core network), an access network (for example, a base station or a sensing network function/sensing network element in a base station), and the like. The base station can be the same device as the sensing node, that is to say, the computing node can include some or all of the sensing nodes. For ease of illustration, in the following embodiments, the computing node being a sensing network element is taken as an example for illustration.

As shown in FIG. 4, the positioning sensing method provided in this embodiment of this application may include the following steps:

Step 401: A computing node obtains a sensing measurement quantity result, where the sensing measurement quantity result is obtained by performing, by a sensing node, signal processing on a first signal that is sent by the sensing node itself and that is reflected by a to-be-sensed target.

During implementation, the sensing node may send a first signal. After the first signal is reflected by the to-be-sensed target, the sensing node receives the first signal sent by itself and reflected by the to-be-sensed target (to distinguish the signal sent by the sensing node from the received signal, in the following embodiments, the signal sent by the sensing node is referred to as the first signal, and the first signal reflected by the to-be-sensed target is referred to as the reflected signal), and signal processing is performed on the received signal to obtain the sensing measurement quantity results. For example, measurement quantities such as the received power, the angle of arrival, or the angle of departure of the received signal are measured.

The first signal may be an NR reference signal (for example, UL-PRS or UL-SRS), or may be a newly designed sensing signal or sensing/integrated communication and sensing signal, which is not specifically limited herein.

Step 402: The computing node determines a positioning sensing result of the to-be-sensed target based on the sensing measurement quantity result.

The sensing measurement quantity result may include at least one of the following:

a Doppler spectrum;
a Doppler frequency of a dynamic reflection path;
a change speed of a length of a dynamic reflection path;
a complete or partial value of an angle power spectrum APS of the first signal; and
a complete or partial value of an angle delay power spectrum ADPS of the first signal.

The above-mentioned angle power spectrum APS may include an angle of arrival power spectrum and/or an angle of departure power spectrum. For ease of illustration, the following embodiments take the angle of arrival power spectrum as an example for illustration, which does not constitute a specific limitation herein.

During implementation, the to-be-sensed target may be a moving target. In this case, the dynamic reflection path is a multipath signal received by the sensing node after the first signal is reflected by the to-be-sensed target.

During practical application, according to the difference in the relative position between the to-be-sensed target and the sensing node sending the first signal, at least one of the angle, power and delay of the reflected signal received by the sensing node and reflected by the to-be-sensed target also correspondingly changes. For example, when the relative position between the to-be-sensed target and the sensing node changes along the tangential direction of the reflection path, the angle of arrival of the reflected signal received by the sensing node and reflected by the to-be-sensed target changes; and when the relative position between the to-be-sensed target and the sensing node changes along the radial direction of the reflection path, the received power and the arrival delay of the reflected signal received by the sensing node and reflected by the to-be-sensed target change. In this way, the computing node can determine the position information of the to-be-sensed target according to the sensing measurement quantity results such as power, delay, and angle measured by the sensing node.

Certainly, the sensing measurement quantity results measured by the sensing node may also include other types of sensing measurement quantities, for example, may also include the rate of change of the received power of the reflected signal, and may determine movement track information of the to-be-sensed target such as the movement speed and the movement direction according to the magnitude of the rate of change of the received power. The types of sensing measurement quantities are not exhaustively listed herein.

Corresponding to the above sensing measurement quantities, the positioning sensing result may include at least one of the following:

an initial position of the to-be-sensed target;
a movement track of the to-be-sensed target;
a movement speed of the to-be-sensed target;
a current position of the to-be-sensed target; and
a future predicted position of the to-be-sensed target.

During implementation, the computing node can obtain different types of positioning sensing results based on different types of sensing measurement quantities, the number of sensing nodes participating in sensing, and the number of times the sensing nodes perform measurement. For example, in a case that the sensing nodes participating in sensing perform at least two times of measurement, the computing node may determine the movement track of the to-be-sensed target according to the sensing measurement quantity results obtained from the at least two times of measurement. For example, to trace the track of the to-be-sensed target, if the sensing measurement quantity of the sensing node includes APS, that is, the sensing node only measures the power spectrum of each angle to measure the direction of the to-be-sensed target, the position of the to-be-sensed target can be measured only when at least two sensing nodes participate in collaborative sensing; and if the sensing measurement quantity of the sensing node includes ADPS, that is, the sensing node measures the power spectrum of each angle and the delay information of the reflected signal at each angle, to implement the direction measurement and the spacing distance measurement of the to-be-sensed target, only at least one sensing node is needed to measure the position of the to-be-sensed target. The sensing measurement quantity represents the parameter type of the sensing measurement quantity result, for example, if the sensing measurement quantity result is a value, the sensing measurement quantity is used to indicate whether the value is a parameter type such as angle, power, or frequency.

In addition, according to the current position, movement speed and movement direction of the to-be-sensed target, the computing node can predict the position of the to-be-sensed target in a short time in the future, that is, the future predicted position of the to-be-sensed target. Alternatively, according to the shape of the movement track of the to-be-sensed target and the initial position of the to-be-sensed target, the computing node may determine the position of each track point during the movement of the to-be-sensed target, thereby determining the movement track of the to-be-sensed target.

In an optional implementation, the determining, by the computing node, a positioning sensing result of the to-be-sensed target based on the sensing measurement quantity result includes:

determining, by the computing node, first positioning information of the to-be-sensed target according to a Doppler frequency of a dynamic reflection path measured by each sensing node at least once, where the first positioning information includes at least one of the following: a movement speed magnitude and a movement direction.

During implementation, in a case that the positioning sensing result includes the first positioning information, the number of the sensing nodes may be at least two, and the at least two sensing nodes are not located on the same straight line as the to-be-sensed target.

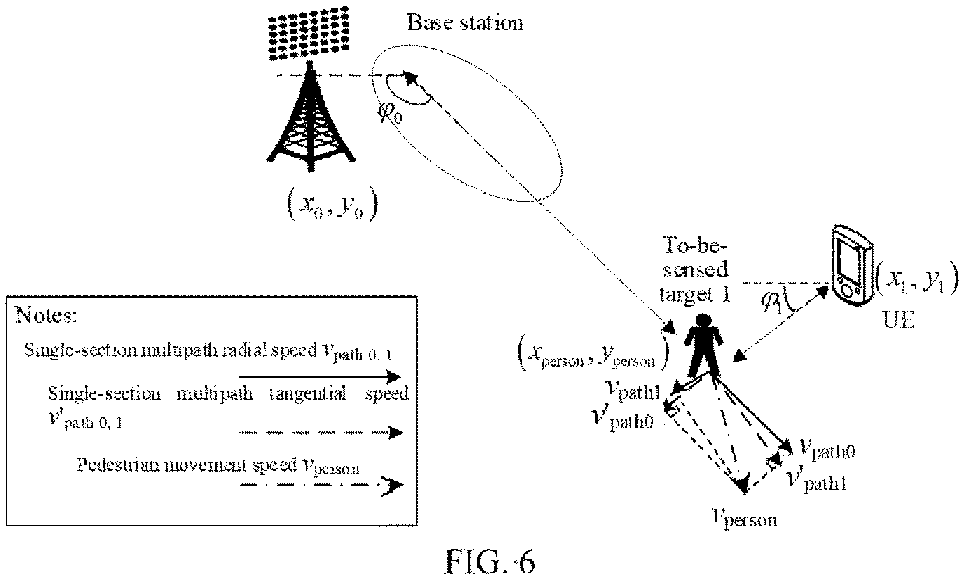

For example, as shown in FIG. 6, it is assumed that the base station and the sensing terminal (hereinafter briefly referred to as UE) participate in the collaborative sensing of the to-be-sensed target 1, and the base station and the UE are located in different directions of the to-be-sensed target 1; it is assumed that positioning is performed through the existing NR positioning method or Global Positioning System (Global Positioning System, GPS) of the UE, so that the core network (sensing function) knows that the base station position is $(x_0, y_0)$, and the UE position is $(x_1, y_1)$; and it is assumed that the position of the to-be-sensed target 1 is $(x_{person}, y_{person})$ and the to-be-sensed target 1 moves away from the base station, and its speed vector is $v_{person}$. Based on the movement of the to-be-sensed target 1, there is a first dynamic reflection path between the base station and the to-be-sensed target 1, there is a second dynamic reflection path between the UE and the to-be-sensed target 1, and directions of the first dynamic reflection path and the second dynamic reflection path are different. In this way, the UE and the base station can obtain Doppler frequencies of their respective corresponding dynamic reflection paths based on echoes. According to the change speeds of the Doppler frequencies obtained by the UE and the base station and the directions of the dynamic reflection paths, the movement speed magnitude and the movement direction can be determined.

Specifically, As shown in FIG. 6, it is assumed that the change speed of the total length of the first dynamic reflection path is $v_{path}^0$, and the change speed of the total length of the second dynamic reflection path is $v_{path}^1$. The change speed of the total length of the dynamic reflection path is twice the radial speed of the reflection point at which the to-be-sensed target 1 is located along the dynamic reflection path, which can be estimated from the Doppler frequency of the reflected signal. $v_{path}^0$ and $v_{path}^1$ can be separately divided into the radial components in the same direction as the corresponding dynamic reflection paths and the tangential components $v'_{path0}$ and $v'_{path1}$ perpendicular to the corresponding dynamic reflection paths. The tangential components do not contribute to the length changes of the corresponding dynamic reflection paths and therefore are ignored herein, that is, in the following embodiments, $v_{path}^0$ and $v_{path}^1$ are regarded as radial components.

The speed of pedestrian movement can be decomposed into a radial speed and a tangential speed at the reflection point of the dynamic reflection path. As shown in FIG. 3, for the reflection path between the pedestrian and the base station, $v_{person}$ can be decomposed into $v_{path0}$ and $v'_{path0}$; and for the reflection path between the pedestrian and the UE, $v_{person}$ can be decomposed into $v_{path}1$ and $v'_{path1}$. According to the base station position $(x_0, y_0)$, the UE position $(x_1, y_1)$, and the pedestrian position $(x_{person}, y_{person})$ at the current moment, we can calculate the directions of the radial speed vectors $v_{path0}$, $v_{path1}$ through the following process.

It is assumed that the position vector of the to-be-sensed target 1 is:

$$p_{person} = \left\langle x_{person}, y_{person} \right\rangle \tag{1}$$

$$p_0 = \left\langle x_0, y_0 \right\rangle \tag{2}$$

$$p_1 = \langle x_1, y_1 \rangle \qquad (3)$$

Then, the dynamic reflection path between the to-be-sensed target 1 and the UE satisfies the following formula (4):

$$\frac{v_{\text{person}} \cdot \left( p_{\text{person}} - p_1 \right)}{\left\| p_{\text{person}} - p_1 \right\|} = v_{\text{path1}} \qquad (4)$$

The dynamic reflection path between the to-be-sensed target 1 and the base station satisfies the following formula (5):

$$\frac{v_{\text{person}} \cdot \left( p_{\text{person}} - p_0 \right)}{\left\| p_{\text{person}} - p_0 \right\|} = v_{\text{path0}} \qquad (5)$$

According to the above equations (4) and (5), the positions of the base station and the UE are known, that is, both vectors $P_0$ and $p_1$ are known, and it is assumed that the position vector $p_{\text{person}}$ of the to-be-sensed target 1 is also known at this moment. Therefore, the change speed $v_{\text{path}}^0, v_{\text{path}}^1$ of the total length of the dynamic reflection path can be calculated based on the multiple signal classification (Multiple Signal Classification, MUSIC) or another Doppler estimation algorithm by self-transmitting and self-receiving the first signal by the base station and the UE. The relationship between the Doppler frequency $f_{\text{d}}^0, f_{\text{d}}^1$ estimated by the base station and the UE and the change speed $v_{\text{path}}^0, v_{\text{path}}^1$ of the total length of the reflection path can be expressed as the following formula (6):

$$\begin{cases} v_{\text{path}}^0 = 2v_{\text{path0}} = \lambda f_{\text{d}}^0 \\ v_{\text{path}}^1 = 2v_{\text{path1}} = \lambda f_{\text{d}}^1 \end{cases} \qquad (6)$$

$\lambda$ is the wavelength of the first signal.

In this way, $v_{\text{person}}$ can be obtained by substituting the above equations (4) and (5) into the above equation (6).

It should be noted that during implementation, since only the radial speed component has an impact on the length of the dynamic reflection path, but the tangential speed component does not affect the length of the dynamic reflection path, it is necessary to use at least two sensing nodes to perform Doppler measurement on the same to-be-sensed target to calculate two scalar unknown numbers (that is, the two-dimensional coordinates of the speed vector) corresponding to $v_{\text{person}}$ of the to-be-sensed target. In other words, if only the base station shown in FIG. 6 is used to perform Doppler measurement on the to-be-sensed target 1, only the movement speed component of the to-be-sensed target 1 along the first dynamic reflection path can be obtained.

It is worth noting that if the sensing demand information includes measuring the movement speed of the to-be-sensed target or estimating the movement track, theoretically only two collaborative sensing UEs are needed, and the speed vector $v_{\text{person}}$ of the to-be-sensed target can be obtained through the above method. When there are more collaborative sensing UEs, the core network or base station can select the two UEs with the highest confidence levels for measurement to obtain the result of $v_{\text{person}}$ based on the grasped UE state information, or use a larger number of UEs for measurement, and then comprehensively obtain the result of $v_{\text{person}}$. For example, it is assumed that the number of sensing nodes participating in the collaborative sensing of the to-be-sensed target is greater than 2. In this case, the above equation (6) becomes an overdetermined equation system. In this case, if the results of all sensing nodes are to be integrated, the least square method can be used to solve $v_{\text{person}}$.

It should be noted that during practical application, in addition to the dynamic reflection path reflected by the to-be-sensed target, there are static reflection paths and dynamic reflection paths in the radio channel received by the sensing node. The static reflection paths include possible direct paths, as well as a multipath caused by stationary objects (for example, buildings, ground, and the like) in the environment. For simplicity, the static reflection path is not shown in FIG. 6. The dynamic reflection path is a multipath caused by the moving to-be-sensed target 1, for example, a multipath on which the sensing signal transmitted by the base station and the UE arrives at the to-be-sensed target 1 and then returns by the same way. As shown in FIG. 6, the dynamic reflection path is represented by a solid double-headed arrow. Since the to-be-sensed target 1 is moving, the Doppler frequency is introduced into the channel, the length of the reflection path of the to-be-sensed target 1 changes, and the speed of the length change is the magnitude of the Doppler frequency of the dynamic reflection path in its propagation direction (relative to the incident and emergent directions of the to-be-sensed target 1). The Doppler frequency corresponding to the dynamic reflection path is obtained based on the echo, and then the change speed of the length of the dynamic reflection path can be obtained accordingly.

During implementation, it is assumed that the interval between two adjacent measurements of the sensing node is short enough relative to the movement speed of the to-be-sensed target (for example, assuming that the to-be-sensed target is a pedestrian with a low movement speed, the measurement time interval of the sensing node can range from 5 to 10 ms; assuming that the to-be-sensed target is a vehicle with a high movement speed, the measurement time interval of the sensing node can be shortened to 1 to 2 ms), during which the to-be-sensed target can be approximately regarded as performing a uniform linear movement, so the position of the to-be-sensed target at the next moment can also be predicted. In this way, for N consecutive measurements in the time dimension, in a case that a certain initial position is given, the movement track coordinates of the to-be-sensed target are obtained.

Optionally, the determining, by the computing node, a positioning sensing result of the to-be-sensed target based on the sensing measurement quantity result includes:

> obtaining, by the computing node, an initial position of the to-be-sensed target; and
> the determining, by the computing node, a positioning sensing result of the to-be-sensed target based on the sensing measurement quantity result includes:
> determining, by the computing node, at least one of a current movement track, a current position, and a future predicted position of the to-be-sensed target based on the initial position and the first positioning information.

During implementation, the computing node can obtain the initial position of the to-be-sensed target based on the existing positioning technology. For example, if the to-be-sensed target is a UE, the initial position of the track of the to-be-sensed target can be determined based on the existing positioning method (DL-TDOA, UL-TDOA, Multi-RTT, DL-AOD, UL-AOA, E-CID and other positioning methods defined in 3GPP). For example, when the track sensing service starts, the network-side device and the UE carried by the pedestrian interact with each other to obtain the initial position of the pedestrian movement track.

For example, if the to-be-sensed target is not a UE, device-free (device-free) to-be-sensed target positioning needs to be performed. In this case, the to-be-sensed target can be positioned based on the echo by self-transmitting and self-receiving a sensing signal by the base station. For example, at the start of the track sensing service, the base station transmits a sensing signal to the pedestrian and receives an echo, and performs distance measurement and angle measurement for the pedestrian, to obtain the initial position of the pedestrian movement track.

In another example, if the to-be-sensed target is a UE, its initial position can also be determined by GPS positioning; and if the to-be-sensed target is not a UE, for its initial position, the initial position information sent by the to-be-sensed target can also be obtained in such interactive manners as Bluetooth (Bluetooth) and Ultra Wide Band (UWB).

Certainly, the computing node may also use a base station or terminal with strong communication capabilities to perform beam scanning to measure the initial position of the to-be-sensed target, and then can trace the movement track of the to-be-sensed target based on the initial position.

For example, a stationary UE participating in sensing estimates the reflection path angle of arrival AOA (or the reflection path angle of departure of the uplink signal) of the to-be-sensed target in any one of the following manners:

> Manner 1: If the UE has a strong sensing capability and can perform sensing in a self-transmitting and self-receiving manner, the number of antennas and bandwidth are large, and the sensing resolution is high, a single UE can implement the initial position positioning of the to-be-sensed target. For example, at the start of the track sensing service, the UE transmits a sensing signal to the pedestrian and receives an echo, and performs distance measurement and angle measurement for the pedestrian, to obtain the initial position of the pedestrian movement track.
> Manner 2: If the UE has a weak sensing capability and cannot perform sensing in a self-transmitting and self-receiving manner, the number of antennas and bandwidth are limited, and the sensing angle and distance resolution is low (this situation is currently the case of most UEs), at least two stationary UEs are required to perform collaborative sensing, and/or each UE participating in collaborative sensing may perform collaborative sensing multiple times at different times to determine the movement track of the to-be-sensed target within the time period, to reversely deduce the starting moment of the time period and the possible initial position of the to-be-sensed target.

It should be noted that during implementation, one or at least two UEs with weaker sensing capabilities may also be used to perform collaborative sensing with one or at least two terminals with stronger sensing capabilities (for example, a small cell), which is not repeated herein.

In this embodiment, when obtaining the initial position of the to-be-sensed target, the computing node can determine the movement track coordinates, the current position, the future predicted position, and other information of the to-be-sensed target according to the movement speed, the movement direction, and other information of the to-be-sensed target measured by the sensing node within a period of time. In other words, based on the movement speed and the movement direction, the shape of the movement track of the to-be-sensed target can be described. In this case, if the coordinates of the track starting point of the movement track are determined, the coordinate position of each track point on the movement track can be determined, and based on this, the predicted position of the to-be-sensed target at the next moment can be predicted.

In an optional implementation, the obtaining, by the computing node, an initial position of the to-be-sensed target includes:

determining, by the computing node, a search area for the initial position of the to-be-sensed target according to prior information of the to-be-sensed target;

determining, by the computing node, an initial position confidence level of each candidate position of the to-be-sensed target in the search area according to an APS/ADPS result measured at least once and reported by each sensing node, where the initial position confidence level represents a possibility that the candidate position is an actual initial position of the to-be-sensed target; and

determining, by the computing node, a candidate position corresponding to an initial position confidence level with a maximum value as the initial position of the to-be-sensed target.

During implementation, the prior information may include at least one of the following:

an estimated area in which the to-be-sensed target is located and that comes from a third party;

position information of the to-be-sensed target measured by the sensing node for a first time;

a final position of a movement track of the to-be-sensed target measured by a third sensing node for a last time;

map information of an environment in which the to-be-sensed target is located;

an initial position probability map of the to-be-sensed target;

position information of the sensing node participating in sensing; and

an estimation position of the to-be-sensed target determined based on another positioning method.

Option 1: An estimated area in which the to-be-sensed target is located and that comes from a third party can be understood as: an approximate position of the to-be-sensed target provided by another terminal, base station, core network, application server, or the like that does not participate in the sensing measurement (that is, a sensing service demander other than the core network party and the access network party or another third party), for example, a sensing demand initiator. The estimated area in which the to-be-sensed target is located is carried in the sensing demand information. In this way, the computing node and each sensing node use the estimated area as a search area to search for an initial position with the highest probability of the to-be-sensed target within the search area.

Option 2: The computing node can directly use the area within a certain range (for example, 500 m) from the position of the to-be-sensed target measured by the sensing node for the first time as the search area for the to-be-sensed target.

Option 3: The above-mentioned third sensing node may include the sensing node and other sensing nodes different from the sensing node. For example, when the to-be-sensed target moves from the sensing range of the sensing node A to the sensing range of the sensing node B, the sensing node B may use the position that is previously measured by the sensing node A and in which the to-be-sensed target leaves its sensing range, that is, the area within a certain range near the position of the to-be-sensed target measured last time, as the search area for the to-be-sensed target.

Option 4: The computing node can determine the search area for the to-be-sensed target according to the map information of the environment where the to-be-sensed target is located. For example, the map information includes the to-be-sensed target and its position information, and then the computing node uses an area within a certain range near the position information corresponding to the to-be-sensed target in the map information as a search area for the to-be-sensed target.

Option 5: During implementation, the computing node can obtain the probability information of the sensing node in each small area in the search area according to the measurement information of the sensing nodes participating in the collaborative sensing, to use a small area with the highest probability as the search area for the to-be-sensed target.

Option 6: The estimated position of the to-be-sensed target determined based on other positioning methods can be understood as the approximate area of the to-be-sensed target measured according to other positioning methods different from the positioning sensing method provided in this embodiment of this application, for example, an approximate area in which the to-be-sensed target is located and that is measured based on a radar technology. The method for determining the search area for the to-be-sensed target is not specified herein.

During implementation, the search area can be divided into multiple small areas according to the sensing accuracy requirements, and the position in each small area can be used as a candidate position; and according to the APS/ADPS result measured at least once and reported by the sensing node, the probability of the to-be-sensed target at each candidate position is determined, and then the candidate position with the highest probability is used as the initial position of the to-be-sensed target.

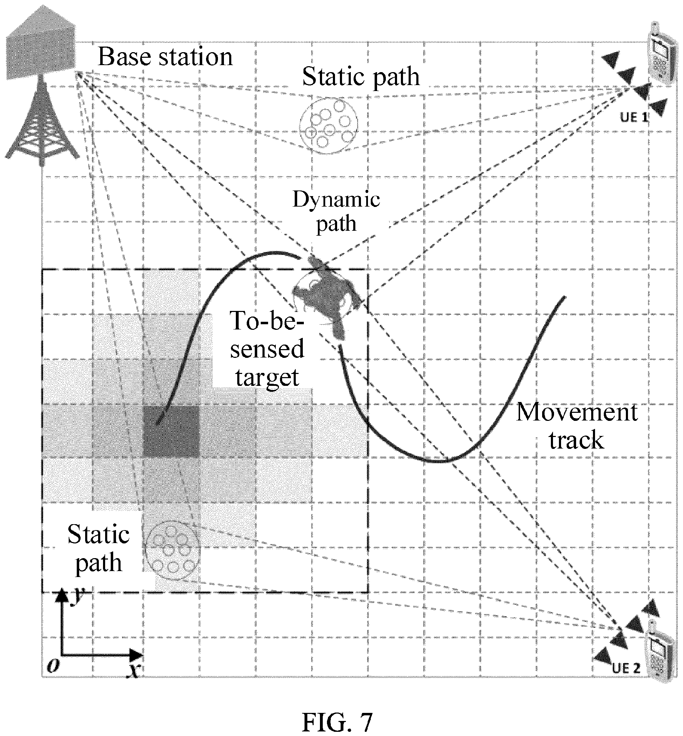

For example, as shown in FIG. 7, it is assumed that the sensing nodes include one base station and two UEs participating in collaborative sensing, the to-be-sensed target is a pedestrian, and the position coordinates of the base station, UE1 and UE2, and the orientations of their own antenna arrays are all known. For each measurement moment, both UE1 and UE2 can obtain the angle of arrival power spectrum (Angle Power Spectrum, APS) of the downlink signal (or the angle of departure power spectrum of the uplink signal) including the dynamic reflection path caused by the pedestrian, and the base station can also obtain the angle of departure power spectrum of the downlink signal (or the angle of arrival power spectrum of the uplink signal) including the dynamic reflection path caused by the pedestrian. The specific angle estimation method can be obtained by referring to the angle measurement method in the current NR positioning technology and the NR beam management idea. The difference is: the sensing measurement quantity results measured by the sensing node that self-transmits and self-receives the sensing signal are obtained by the sensing node itself, and do not need to be reported to the sender of the sensing signal, but only need to be reported to the computing node (for example, the core network). The angle estimation method is not described in detail herein. Certainly, In the embodiments of this application, the angle estimation method may also be implemented by the algorithm of the base station or the UE participating in collaborative sensing. For example, the angle power spectrum may be obtained through fast Fourier transform (Fast Fourier Transform, FFT) (including zero padded FFT), a commonly used spatial domain filter such as a Bartlett beamformer (Bartlett Beamformer), a minimum variance distortionless response (Minimum Variance Distortionless Response, MVDR), MUSIC, and their improved algorithms. A dynamic reflection path can be identified through Doppler spectrum estimation combined with pattern recognition or machine learning.

For any moment in the track tracing process, as long as at least two of UE1, UE2, and the base station have determined the angle of arrival/angle of departure of the reflected signal of the to-be-sensed target, an intersection point of extension lines starting from the at least two and in their respective estimated angular directions is the pedestrian position. However, as shown in FIG. 7, since the sensing capability of a UE is relatively weak, and different UEs may have different sensing capabilities, the pedestrian position sensed through collaboration between the UEs (or collaboration between the base station and a UE) is estimated as a wider area. A larger number of UEs participating in sensing indicates a highest confidence level of an overlapping area of areas estimated by all UEs.

It should be noted that for intuitive expression, it is assumed that the relative positions of the base station, UE1, UE2, and the pedestrian are shown in FIG. 7. However, in fact, UE1, UE2, and the base station do not necessarily need to be in three vertexes of the square area. This does not constitute a specific limitation.

In some implementations, the determining, by the computing node, an initial position confidence level of each candidate position of the to-be-sensed target in the search area according to an APS/ADPS result measured at least once and reported by each sensing node includes:

   determining, by the computing node, an estimation movement track of the to-be-sensed target according to the movement speed magnitude and the movement direction of the to-be-sensed target;
   assuming, by the computing node, that the initial position of the to-be-sensed target is a first candidate position in the search area, and determining, based on the first candidate position and the estimation movement track, an angle of arrival and/or an angle of departure of a dynamic reflection path corresponding to each track point on the estimation movement track;
   determining, by the computing node, a track position confidence level of each track point of the to-be-sensed target on the estimation movement track according to second information, where the second information includes: the angle of arrival and/or the angle of departure of the dynamic reflection path corresponding to each track point on the estimation movement track, and an APS/ADPS that is measured by the sensing node; and
   determining, by the computing node, an initial position confidence level corresponding to the first candidate position according to a position confidence level corresponding to each track point on the estimation movement track.

During implementation, the above-mentioned estimated movement track may be in the shape of the movement track of the to-be-sensed target, and the position coordinates of each track point on the movement track can be determined as long as the track starting point of the movement track (that is, the initial position of the to-be-sensed target) is determined.

During practical application, the computing node separately assumes that the initial position of the to-be-sensed target is each candidate position in the search area and the initial position confidence level is used for representing the probability that the initial position of the to-be-sensed target is indeed the candidate position. In this way, a higher initial position confidence level in the search area indicates a higher probability that the to-be-sensed target is located at the candidate position corresponding to the initial position confidence level, and then the candidate position with the highest initial position confidence level is determined as the initial position of the to-be-sensed target. The most likely initial position of the to-be-sensed target can be determined from the search area.

Specifically, the determining, by the computing node, a track position confidence level of each track point of the to-be-sensed target on the estimation movement track according to second information can be understood as: when it is assumed that the initial position of the to-be-sensed target is the target candidate position in the search area, the position of each track point on the estimated movement track with the target candidate position as the starting point of the track is uniquely determined, then an angle of arrival/angle of departure of the reflected signal between the position of each track point and the sensing node can be determined, and accordingly the power value corresponding to the angle of arrival/angle of departure, that is, the power value of the reflected signal reflected by the to-be-sensed target at this position is determined from APS/ADPS. If the power value is larger (for example, spectrum peak in APS/ADPS), it indicates that the probability that the track point is indeed at this position is larger.

Correspondingly, the determining, by the computing node, an initial position confidence level corresponding to the first candidate position according to a position confidence level corresponding to each track point on the estimation movement track can be expressed as: the initial position confidence level corresponding to the first candidate position is positively correlated with power values of all track points on the estimated movement track, for example, the initial position confidence level corresponding to the first candidate position is a sum of the power values of all the track points on the estimated movement track, or the initial position confidence level corresponding to the first candidate position is a product of the power values of all the track points on the estimated movement track. In this way, the power values of all the track points on the estimated movement track are integrated to determine the initial position confidence level corresponding to the first candidate position. That is to say, if the position of each track point on the movement track determined according to the first candidate position is more accurate, the probability that the initial position of the to-be-sensed target is indeed the first candidate position is higher.

During implementation, the APS/ADPS result measured and reported by the sensing node may include any one of the following:

a complete APS/ADPS measured by the sensing node;
a partial APS/ADPS corresponding to a reflection path spectrum peak measured by the sensing node; and
an APS/ADPS value that corresponds to target angle of arrival/angle of departure information indicated by the sensing network element and that is measured by the sensing node.

Option 1: The sensing node reports all the measured APS/ADPS to the computing node, so that the computing node can determine the angle of arrival/angle of departure between the to-be-sensed target and the sensing node, and accordingly determine the power value corresponding to the angle of arrival/angle of departure from the APS/ADPS as the power value of the dynamic reflection path between the to-be-sensed target and the sensing node.

Option 2: Since the dynamic reflection path between the sensing node and the to-be-sensed target is usually located at the spectrum peak position of the APS/ADPS, the terminal only reports the part of the APS/ADPS measured corresponding to the spectrum peak of the reflection path, which can reduce the transmission resource and transmission overhead of the sensing node and the data processing amount of the computing node to determine the power value of the dynamic reflection path between the to-be-sensed target and the sensing node from all of the APS/ADPS, compared with the embodiment shown in option 1.

Option 3: During implementation, the computing node can send the angle of arrival/angle of departure between the to-be-sensed target and the sensing node determined by the computing node to the sensing node, and the sensing node can only send the APS/ADPS value corresponding to the angle of arrival/angle of departure to the computing node, which can further reduce the transmission resource and transmission overhead of the sensing node and the data processing amount of the computing node to determine the power value of the dynamic reflection path between the to-be-sensed target and the sensing node from the spectrum peak of the APS/ADPS, compared with the embodiment shown in option 2.

In an optional implementation, in a case that the quantity of sensing nodes is greater than 1, the method further includes:

obtaining, by the computing node, a weight of each sensing node, where the weight is used for representing a measurement quantity result confidence level of the corresponding sensing node; and
the second information further includes: the weight of each sensing node; and the track position confidence level is positively correlated with a first value of each sensing node, and the first value is a product of the weight of the corresponding sensing node and an APS/ADPS value.

During implementation, different types of sensing nodes may have different information such as sensing algorithms, sensing capabilities, and number of antennas, which may lead to differences in the reliability of measurement quantities measured by different sensing nodes. In this embodiment, the measurement result confidence level of each sensing node is also distinguished to determine the weight of the APS/ADPS value measured by each sensing node in the track position confidence level, so that the weight of the APS/ADPS value measured by the sensing node with a low measurement quantity result confidence level in the track position confidence level is also adaptively reduced, and the weight of the APS/ADPS value measured by the sensing node with a high measurement quantity result confidence level in the track position confidence level is also adaptively increased, which can further improve the reliability of the track position confidence level and the initial position confidence level.

For example, as shown in FIG. 7, it is assumed that angle power spectrum APS of a channel detected by UE 1, UE 2 and the base station at the moment $t_n$, $n$ = 1, 2, 3,..., $N$ is respectively: $P_{u1}(\varphi_1,t_n), \varphi_1 \in [\varphi_{min1}, \varphi_{max1}]$, $P_{u2}(\varphi_2,t_n), \varphi_2 \in [\varphi_{min2}, \varphi_{max2}]$, and $P_0(\varphi_0,t_n), \varphi_0 \in [\varphi_{min0}, \varphi_{max0}]$. $\varphi_1$ represents the angle of arrival/angle of departure of the reflected signal between the to-be-sensed target and UE1; $\varphi_2$ represents the angle of arrival/angle of departure of the reflected signal between the to-be-sensed target and UE2; $\varphi_0$ represents the angle of arrival/angle of departure of the reflected signal between the to-be-sensed target and the base station. In the previous speed and track estimation of the to-be-sensed target, because the speed and direction of the target at each moment can be estimated, the shape of the track of the target within a period of time $t_n, n$ =1, 2, 3,..., $N$ can be obtained. The sensing area is divided into a grid map as shown in FIG. 7. In theory, if all the grids on the map are traversed as the initial position of the hypothetical track, then each position on the corresponding track can be combined with each UE position to obtain the corresponding UE angle of arrival (or angle of departure, depending on whether it is an uplink signal or a downlink signal), which is substituted into the UE angle power spectrum at a corresponding moment to obtain a corresponding power value. Assuming that at the moment $t_n, n$ =1,2,3,...,$N$, the position of the pedestrian is $(x_n, y_n)$, the corresponding angle of arrival of the base station is $\varphi_{n0}$, the angle of arrival of UE 1 is $\varphi_{n1}$, and the corresponding angle of arrival of UE 2 is $\varphi_{n2}$, then the track position confidence level of the pedestrian at the position $(x_n, y_n)$ can be expressed by the following formula (7):

$$
C_{\text{position}}^n = \begin{cases}
\left[ \lambda_{u1}(t_n) P_{u1}(\varphi_{n1}, t_n) \right] \cdot \left[ \lambda_{u2}(t_n) P_{u2}(\varphi_{n2}, t_n) \right]; & \text{①} \\
\left[ \lambda_0(t_n) P_0(\varphi_{n0}, t_n) \right] \cdot \left[ \lambda_{u1}(t_n) P_{u1}(\varphi_{n1}, t_n) \right] \cdot \left[ \lambda_{u2}(t_n) P_{u2}(\varphi_{n2}, t_n) \right]; & \text{②} \\
\left[ \lambda_{u0}(t_n) P_0(\varphi_{n0}, t_n) \right] \cdot \left[ \lambda_{ui}(t_n) P_{ui}(\varphi_{ni}, t_n) \right], i = 1 \text{or} 2; & \text{③}
\end{cases}
\quad (7)
$$

$\lambda_{u1}(t_n), \lambda_{u2}(t_n), \lambda_0(t_n)$ are the weights (that is, the measurement result confidence levels) of UE 1, UE 2 and the base station respectively. When only UE1 and UE2 are performing APS measurement, formula (7)-① is used to calculate the track position confidence level of the pedestrian at the position $(x_n, y_n)$; when the base station, UE1 and UE2 are all performing APS measurement, formula (7)-(2) is used to calculate the track position confidence level of the pedestrian at the position $(x_n, y_n)$; and when either of UE1 and UE2 and the base station are performing APS measurement, formula (7)-③ is used to calculate the track position confidence level of the pedestrian at the position $(x_n, y_n)$.

During implementation, the weight of a sensing node may be reported by the sensing node to the computing node, or the computing node may determine the weight of a sensing node according to prior information of each sensing node.

For example, the core network (for example, the sensing network function or sensing network element) determines the weight of a sensing node according to prior information such as sensing capabilities of the sensing node participating in sensing (including state information such as sensing bandwidth of the sensing node and the number of antennas), the method adopted for determining the position of the sensing node or other information capable of representing the position accuracy of the sensing node, the coordinate position information of the sensing node, and the orientation information of the antenna array of the sensing node.

The value range of the above weight can be (0, 1] or (0, a certain non-negative value], and a larger value indicates a higher confidence level of the sensing measurement quantity result measured by the corresponding sensing node. In the process of tracing the track of the to-be-sensed target, the weight of the sensing node can be a fixed value, or a variable that satisfies the value range, that is, it can be associated with time or the spatial position of the to-be-sensed target, which is not specifically limited herein.

To comprehensively consider the confidence levels of all N estimated positions on the entire track to determine the most likely starting point position of the track, the initial position confidence level defining the initial position $(x_i, y_i)$ can be expressed by the following formula (8):

$$C_{trace}^i = C_{position}^1 \cdot C_{position}^2 \cdot \ldots \cdot C_{position}^N = \prod_{n=1}^{N} C_{position}^n \qquad (8)$$

$C_{trace}^i$ indicates the confidence level of the initial position of the to-be-sensed target at $(x_i, y_i)$; and $C_{position}^1$ indicates the track position confidence level of the position of the to-be-sensed target at the moment $t_1$ determined based on the initial position $(x_i, y_i)$, and $\prod_{n=1}^{N} C_{position}^n$ indicates a continued product of the track position confidence levels of the positions of the to-be-sensed target at each moment from $t_1$ to $t_N$ determined based on the initial position $(x_i, y_i)$.

Certainly, in addition to the above formula (7), $C_{position}^n$ can also be calculated by the following formula (9):

$$C_{position}^n = \begin{cases} \left[\lambda_{u1}(t_n) P_{u1}(\varphi_{n1}, t_n)\right] + \left[\lambda_{u2}(t_n) P_{u2}(\varphi_{n2}, t_n)\right]; & \text{①} \\ \left[\lambda_0(t_n) P_0(\varphi_{n0}, t_n)\right] + \left[\lambda_{u1}(t_n) P_{u1}(\varphi_{n1}, t_n)\right] + \left[\lambda_{u2}(t_n) P_{u2}(\varphi_{n2}, t_n)\right]; & \text{②} \\ \left[\lambda_{u0}(t_n) P_0(\varphi_{n0}, t_n)\right] + \left[\lambda_{ui}(t_n) P_{ui}(\varphi_{ni}, t_n)\right], i = 1 or 2; & \text{③} \end{cases} \qquad (9)$$

When only UE1 and UE2 are performing APS measurement, formula (9)-① is used to calculate the track position confidence level of the pedestrian at the position $(x_n, y_n)$; when the base station, UE1 and UE2 are all performing APS measurement, formula (9)-② is used to calculate the track position confidence level of the pedestrian at the position $(x_n, y_n)$; and when either of UE1 and UE2 and the base station are performing APS measurement, formula (9)-③ is used to calculate the track position confidence level of the pedestrian at the position $(x_n, y_n)$.

In addition, in addition to the above formula (8), $C_{trace}^i$ can also be calculated by the following formula (10):

$$C_{trace}^i = C_{position}^1 + C_{position}^2 + \ldots + C_{position}^N = \sum_{n=1}^{N} C_{position}^n \qquad (10)$$

During practical application, equations (7) and (8) can be used together, equations (9) and (10) can also be used together, and equations (7) and (10) or equations (8) and (9) can also be used together; or the defined track position confidence level $C_{position}^n$ is taken as an independent variable, some preset function is used to get the initial position confidence level, and the preset function can be a monotonically increasing function of the independent variable.

It should be noted that if the sensing demand information requires the to-be-sensed target to maintain a Line Of Sight (Line Of Sight, LOS) relationship, and the UE or the base station has distance sensing capabilities, that is, it can measure the distance of the to-be-sensed target through the sensing signal echo, then at least one UE or one base station is required to determine the confidence level of the pedestrian at the position $(x_n, y_n)$. For example, if the sensing node has both distance measurement and angle measurement capabilities, theoretically one sensing node can perform target positioning. Certainly, if it is necessary to trace the track of the to-be-sensed target and estimate the speed and direction of the target, at least two sensing nodes are required. In this case, the above equation (7) can be changed to the following equation (11):

$$C_{position}^n = \begin{cases} \left[\lambda_{u1}(t_n) P_{u1}(\varphi_{n1}, \tau_{n1}, t_n)\right] \cdot \left[\lambda_{u2}(t_n) P_{u2}(\varphi_{n2}, \tau_{n2}, t_n)\right]; & \text{①} \\ \left[\lambda_0(t_n) P_0(\varphi_{n0}, \tau_{n0}, t_n)\right] \cdot \left[\lambda_{u1}(t_n) P_{u1}(\varphi_{n1}, \tau_{n1}, t_n)\right] \cdot \left[\lambda_{u2}(t_n) P_{u2}(\varphi_{n2}, \tau_{n2}, t_n)\right]; & \text{②} \\ \left[\lambda_{u0}(t_n) P_0(\varphi_{n0}, \tau_{n0}, t_n)\right] \cdot \left[\lambda_{ui}(t_n) P_{ui}(\varphi_{ni}, \tau_{ni}, t_n)\right], i = 1 or 2; & \text{③} \end{cases} \qquad (11)$$

In $P_{u1}(\varphi_1,\tau_1,t_n)$, $\varphi_1 \in [\varphi_{min1},\varphi_{max1}]$ and $\tau_1 \in [\tau_{min1},\tau_{max1}]$ are the angle delay power spectrum (Angle Delay Power Spectrum, ADPS) UE 1; in $P_{u2}(\varphi_2,\tau_2,t_n)$, $\varphi_2 \in [\varphi_{min2},\varphi_{max2}]$ and $\tau_2 \in [\tau_{min2},\tau_{max2}]$ are the ADPS of UE 2; and in $P_{u0}(\varphi_0,\tau_0,t_n)$, $\varphi_0 \in [\varphi_{min0},\varphi_{max0}]$ and $\tau_0 \in [\tau_{min0},\tau_{max0}]$ are the ADPS of the base station.

During practical application, APS or ADPS may be selected for measurement according to different capabilities of sensing nodes, which is not specifically limited herein.

In this embodiment, as shown in FIG. 7, assuming that the search area is divided into a total of 1 grids, the grid corresponding to the maximum initial position confidence level obtained by traversing calculation of $C_{trace}^i$, $i = 1,2, ..., I$ for all grids is the most likely initial position of the to-be-sensed target pedestrian. As shown in FIG. 7, different color depths represent the track confidence level values of different grids. In fact, if the network knows some prior information about the initial position of the to-be-sensed target in advance, such as NR-based positioning information (for example, the approximate position of the target is known using the NR positioning method before the track sensing starts), historical track information (for example, daily behavior habits of the to-be-sensed target), environmental map information (for example, obstacles in other areas), and the like, the grid search range can be narrowed, as shown in the bold dashed box area in FIG. 7. This processing can greatly reduce the amount of computation for network sensing.

It is worth pointing out that, the above equations (7) to (11) are actually not limited to the sensing use case of track tracing described above. For a sensing service, when multiple sensing nodes can be used for collaborative sensing, the methods described in equations (7) to (11) can be used to quantify the confidence levels of measurement quantities of the sensing nodes. The collaborative sensing means that to achieve the sensing purpose (that is, to obtain the final sensing result), one or more measurement quantities can be measured through multiple different sensing nodes, and the final sensing result is determined comprehensively based on the measurement quantities of the above-mentioned multiple sensing nodes.

Optionally, before the above step 401, the sensing positioning method provided in this embodiment of this application further includes:

obtaining, by the computing node, first information, where the first information includes: positioning sensing demand information of the to-be-sensed target and position information of the sensing node; and
determining, by the computing node, the sensing node according to the first information.

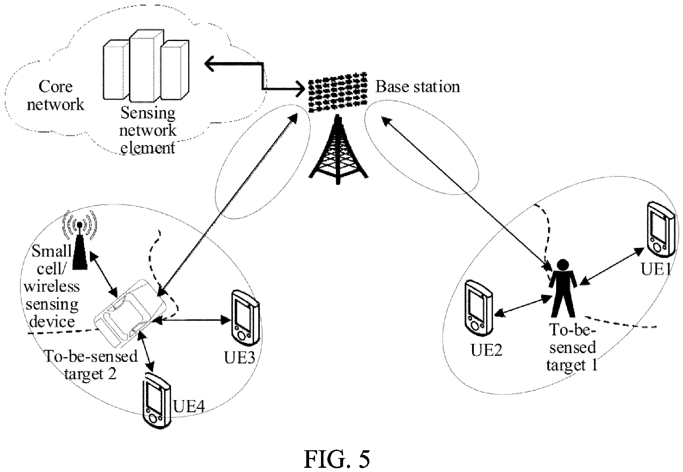

During implementation, there are often a large number of sensing nodes (for example, terminals, base stations, sensing devices, small cells, and the like) that can participate in positioning sensing services. For example, as shown in FIG. 5, it is assumed that the computing node is the sensing function (Sensing Function) in the core network, the base station, user equipment (User Equipment, UE) 1 and UE 2 are sensing nodes participating in the collaborative sensing of the to-be-sensed target 1 (target person), and the base station, UE 3, UE 4 and the small cell/sensing device are sensing nodes participating in Collaborative Sensing of the to-be-sensed target 2 (target vehicle).

In some embodiments, the first information may further include state information of the sensing node.

The state information may include at least one of the following:
sensing capability indication information, antenna orientation and tilt information, beamforming configuration information, position information, a determining method for the position information, a movement state indication, a communication state indication, and a sensing state indication.

The above sensing capability indication information can be used to indicate capability information such as the maximum bandwidth and time-frequency resources, the number of antennas, and the maximum sensing distance that a sensing node can use to support sensing. Based on the capability information, whether a sensing node can provide and satisfy a sensing requirement corresponding to the sensing demand information, for example, whether the sensing accuracy meets the preset accuracy requirement may be determined. Based on the movement state indication, whether the sensing nodes are in a stationary state is determined, to preferentially select a sensing node in the stationary state for sensing measurement. Based on the communication state indication, whether the sensing nodes are performing a communication service is determined, to preferentially select an idle sensing node that is not performing a communication service for sensing measurement. The above-mentioned sensing state indication can indicate whether the sensing node supports collaborative sensing in the current time period, a time period in which collaborative sensing can be supported, whether the sensing service is currently in progress, and the like, to select a sensing node that can currently support collaborative sensing to perform sensing measurement.

Optionally, the determining, by the computing node, the sensing node according to the first information includes:

determining, by the computing node, that the sensing node includes a first network-side device according to the positioning sensing demand information and state information of network-side devices;
sending, by the computing node, the positioning sensing demand information to the first network-side device; and

receiving, by the computing node, third information from the first network-side device, and determining based on the third information that the sensing node further includes a first device, where the first network-side device determines the first device participating in the collaborative sensing of the to-be-sensed target according to the positioning sensing demand information and state information of an associated device, and the third information is used to indicate that the first device participates in the collaborative sensing corresponding to the positioning sensing demand information.

The above-mentioned first network-side device may be a base station, and the device associated with the first network-side device may be understood as a terminal/small cell accessing the base station, or a terminal/small cell corresponding to the same sensing sub-area as the base station, or the like.

In addition, in this embodiment, the computing node mentioned above may be a sensing network element, and the first device may be a terminal, a small cell, a wireless sensing device, or the like participating in collaborative sensing. For the convenience of description, it is referred to as a UE in this embodiment. In this way, the sensing network element can determine the base station participating in the sensing service according to the sensing demand information and the state information that is reported by the base station, and the base station can broadcast the control information carrying the sensing demand information and indicating a UE state information reporting request in the sensing area, so that the UE within coverage of the base station reports its UE state information, or the base station may obtain UE state information through other methods (for example, pre-stored). Furthermore, the base station can determine the UE participating in the collaborative sensing according to the state information of the UE, and report it to the sensing network element.

Optionally, the third information further includes at least one of the following:
the identifier of the first device, the position information of the first device, the method for determining the position information of the first device, the number of the first devices, and the state information of the first device.

In this way, the sensing network element can determine the relevant information of the UE participating in the collaborative sensing based on the third information.

During implementation, the method for determining the UE participating in collaborative sensing may be one of the following:

1. Determine the UE participating in the collaboration according to the sensing area information in the sensing demand, the UE movement state indication, and the UE position information (that is, the UE position coordinates).
2. Determine the UE participating in the collaboration according to the sensing area information in the sensing demand, the UE movement state indication, the UE position information (that is, the UE position coordinates), and the UE position information determining method (or equivalently, information representing the UE position accuracy).
3. Determine the UE participating in the collaboration according to the sensing area information in the sensing demand, the UE movement state indication, and the UE sensing capability indication information.
4. Determine the UE participating in the collaboration according to the sensing area information in the sensing demand, the UE movement state indication, the UE communication state indication, and the UE sensing state indication.
5. Determine the UE participating in the collaboration according to the sensing area information in the sensing demand and at least any one of the above UE state information.

It is worth noting that the accuracy of the track tracing of the to-be-sensed target is closely related to the position accuracy of the collaborative sensing UE, and UEs that are scattered in the sensing area should be selected to participate in the collaborative sensing to ensure that the collaborative sensing UEs are distributed in different orientations of the to-be-sensed target as much as possible.

Optionally, the positioning sensing demand information may include at least one of the following:
a sensing area (for example, geographical coordinates of the sensing area, length, width, height and distance of the sensing area, and the like), a to-be-sensed target type (for example, car, motorcycle, pedestrian, and the like, and can indicate the movement speed range of the to-be-sensed target from the side, and the reflected power level of the radio signal), a to-be-sensed target identifier (for example, whether the to-be-sensed target is a UE, and if yes, can be accompanied by corresponding UE ID and other information), quality of service (Quality of Service, QoS) information (may include a sensing/integrated communication and sensing service type, a sensing/integrated communication and sensing service priority, sensing resolution requirements, sensing error requirements, sensing delay budget, maximum sensing range requirements, continuous sensing capability requirements, sensing update frequency requirements, and the like, and communication QoS (integrated communication and sensing service), such as communication delay budget, false alarm rate, and the like), the minimum number of sensing nodes, the number and density of to-be-sensed targets in the sensing area, the feedback mode of sensing results (for example, real-time feedback or feedback after sensing service receiving), a positioning sensing start condition, and a positioning sensing end condition.

The positioning sensing start condition includes at least one of the following:

an initiator of the positioning sensing demand information initiates a sensing service start request;
the to-be-sensed target reaches a preset geographic area;
historical position information of the to-be-sensed target is obtained through another positioning method; and
a preset start time of a sensing service corresponding to the positioning sensing demand information is reached
(for example, tracing and sensing the track of the moving target (vehicle) at a crossroad every Friday at 5:30 pm).

In addition, the positioning sensing end condition includes at least one of the following:

an initiator of the positioning sensing demand information initiates a sensing service stop request;
a prescribed time for a sensing service is reached;
a predetermined quantity of measurement times for a sensing service is reached;
the to-be-sensed target stops moving, and a stop time reaches a preset time threshold;
the to-be-sensed target reaches or leaves a preset geographic area; and
a sensing node participating in collaborative sensing is unable to continue to provide a collaborative sensing service,
and none of sensing nodes in the sensing area satisfies a corresponding collaborative sensing condition.

According to the above sensing area, the sensing node that performs sensing measurement in the sensing area can be determined accordingly; according to the above to-be-sensed target type, the time interval between each sensing measurement can be determined; according to the above to-be-sensed target identifier, for example, UE ID, the to-be-sensed target can be distinguished; based on the QoS information, the configuration information such as the power and frequency of the first signal can be adjusted; based on the minimum number of sensing nodes, the corresponding number of sensing nodes can be determined to participate in the sensing process; based on the number and density of to-be-sensed targets in the sensing area, the number and distribution of sensing nodes in the sensing process can be determined; based on the sensing result feedback method, after obtaining the positioning sensing result of the to-be-sensed target, feedback can be performed according to the sensing result feedback method; based on the positioning sensing start condition, a condition that is met to start positioning sensing can be determined; and based on the positioning sensing end condition, a condition that is met to terminate or end the positioning sensing process can be determined.

Through this embodiment, the computing node can determine one or part of the sensing nodes participate in the positioning sensing process of the to-be-sensed target according to the positioning sensing demand information of the to-be-sensed target and the position information of the sensing node, while other sensing nodes may not participate in the positioning sensing process of the to-be-sensed target or may participate in a positioning sensing process of another to-be-sensed target. Alternatively, following the movement of the to-be-sensed target, when the to-be-sensed target moves from the sensing range of the sensing node A to the sensing range of the sensing node B, the computing node can update the sensing node A among the sensing nodes to the sensing node B, to trace the track of the to-be-sensed target.

Optionally, after the determining, by the computing node, the sensing node according to the first information, the method further includes:
sending, by the computing node, configuration parameter information to the sensing node, where the first signal sent by the sensing node is determined through the configuration parameter information.

The configuration parameter information may include at least one of the following:

a waveform: for example, orthogonal frequency division multiplex (Orthogonal frequency division multiplex, OFDM), SC-FDMA, Orthogonal Time Frequency Space (Orthogonal Time Frequency Space, OTFS), Frequency-Modulated Continuous Wave (Frequency-Modulated Continuous Wave, FMCW), a pulse signal, or the like;
a subcarrier spacing: for example, a subcarrier spacing of an OFDM system is 30 KHz;
a bandwidth: this parameter is inversely proportional to the distance resolution and can be determined according to the sensing/integrated communication and sensing QoS in the sensing demands;
a burst (burst) duration: the one burst refers to a group of sensing/integrated communication and sensing signals/NR reference signals sent continuously in the time domain, and this parameter determines the sensing Doppler/speed resolution;
an intra-burst signal time interval: it refers to the time interval of sensing/integrated communication and sensing signals/NR reference signals in one burst; and this parameter determines the maximum estimable range of sensing Doppler/speed;
an inter-burst time interval: it refers to the time interval between adjacent bursts when multiple bursts need to be sent;
a transmitted signal power: for example, a value is taken every 2 dBm from -20 dBm to 23 dBm;

a signal format: it indicates the format of the first signal, for example, downlink synchronization and physical broadcast channel block (Synchronization Signals (SS) and Physical Broadcast Channel Block, SSB), sounding reference signal (Sounding Reference Signal, SRS), demodulation reference signal (Demodulation Reference Signal, DMRS), or positioning reference signal (Positioning Reference Signal, PRS), or other predefined signals, and related sequence formats and other information;

a signal direction: for example, direction or beam information of the first signal;

a time resource: for example, a slot index of the first signal or a symbol index of a slot, where time resources are divided into two types, where one type is a one-time time resource, for example, one symbol sends one omnidirectional first signal; and the other type is a non-one-time time resource, for example, a plurality of groups periodic time resources or non-consecutive time resources (which may contain a start time and an end time), where each group of periodic time resources send sensing signals in the same direction, and beam directions on different groups of periodic time resources are different;

a frequency resource: including a center frequency point, a bandwidth, a resource block (Resource Block, RB) or subcarrier, a reference frequency position (Point A), a starting bandwidth position, and the like of the sensing signal; and

a quasi-co-location (Quasi-co-location, QCL) relationship: for example, the sensing signal includes a plurality of resources, each resource corresponds to an SSB QCL, and the type of QCL includes Type A, B, C or D.

During implementation, the above-mentioned configuration parameter information may be determined by the sensing network element and delivered to the sensing node. For example, the sensing network element sends configuration parameter information to the sensing terminal through NAS signaling, and/or the sensing network element sends the configuration parameter information to the sensing base station; or after the network completes grouping of the collaborative sensing UEs, the sensing network function/sensing network element sends the configuration parameter information related to the sensing/integrated communication and sensing signal/NR reference signal to the base station participating in the sensing, and the base station then delivers the configuration parameter information to the sensing terminal.

In some implementations, after the parameter configuration of each sensing node is completed, the core network can send a sensing start indication to at least one base station and one collaborative sensing group in the sensing area according to the sensing demands and the prior information grasped by the core network, so that each sensing node starts to perform sensing measurement on the to-be-sensed target based on the sensing start indication.

In this embodiment, the computing node can configure the first signal sent by the sensing node according to the sensing demand information, the prior information of the sensing node participating in the sensing (for example, at least one of capability information and position information), and the like, so that the first signal can be reflected by the to-be-sensed target and then received by the sensing node, and the sensing node can obtain the sensing measurement quantity result that can meet the sensing demand information according to the measurement process of the reflected signal.

Optionally, the determining, by the computing node, the sensing node according to the first information includes: allocating, by the computing node, the sensing node participating in collaborative sensing to the to-be-sensed target from determined sensing nodes participating in a collaborative sensing service.

During implementation, the computing node can allocate a sensing node participating in the sensing to each to-be-sensed target, and/or the computing node can allocate a group of sensing nodes to each area, to use the group of sensing nodes to sense the to-be-sensed target located in the corresponding area.

In an optional implementation, the allocating, by the computing node, the sensing node participating in collaborative sensing to the to-be-sensed target from determined sensing nodes participating in a collaborative sensing service includes:

allocating, by the computing node, a corresponding sensing node to each sensing sub-area, where the sensing sub-areas are areas with smaller physical ranges obtained by dividing a sensing area; and

determining, by the computing node, that the sensing nodes include a sensing node corresponding to a sensing sub-area in which the to-be-sensed target is located.

Based on this embodiment, different sensing nodes can be allocated to to-be-sensed targets located in different sensing sub-areas, so that sensing measurement can be performed using sensing signals covering the sensing sub-areas to improve the reliability of sensing results.

Optionally, the sensing sub-areas include: network-side device sensing sub-areas and terminal sensing sub-areas, where at least one network-side device is allocated to one of the network-side device sensing sub-areas, at least one terminal is allocated to one of the terminal sensing sub-areas, and one of the network-side device sensing sub-areas covers at least one of the terminal sensing sub-areas; and

the method further includes:

associating, by the computing node, a network-side device allocated to one of the network-side device sensing sub-areas with a terminal allocated to at least one of the terminal sensing sub-areas.

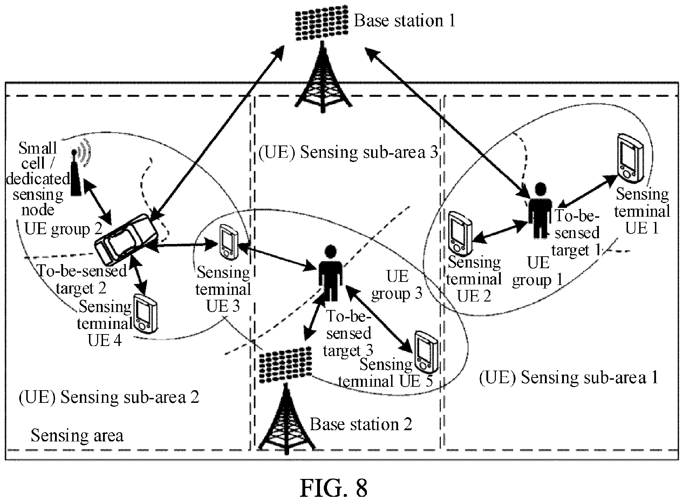

During implementation, the above-mentioned network-side device may include a base station, and the above-mentioned terminal may include a UE. Based on the fact that the base station has a wider coverage and is usually stronger than the terminal, separately dividing the base station and the terminal into sensing sub-areas can improve the utilization of the base station. For example, as shown in FIG. 8, a sensing sub-area of base station 1 covers three UE sensing sub-areas, and each UE sensing sub-area may have at least one sensing terminal, small cell and/or wireless sensing device (for convenience of description, hereinafter briefly referred to as UE).

In addition, for the foregoing associating a network-side device allocated to one of the network-side device sensing sub-areas with a terminal allocated to at least one of the terminal sensing sub-areas, the base station can be used to perform wireless sensing, and the terminal associated with the base station can be used to perform collaborative sensing. In other words, the to-be-sensed target itself is mobile, and its moving range may be larger than that of the UE or even the maximum sensing range of the base station. In this embodiment, UEs in the sensing area can be further grouped, and different UE groups and/or different base stations can be used to sense target tracks in different track segments (sub-areas). Secondly, the sensing service may sense multiple targets in a large area, and UE grouping can avoid scheduling conflicts as much as possible, that is, avoid a case that the same UE may be allocated to sense different targets simultaneously. In addition, generally, the initial position of the to-be-sensed target is unknown (only confirmed to be within the sensing area), and dividing the sub-area is beneficial to determine the initial collaborative sensing UE group and the associated participative sensing base stations, reduce the search range of subsequently estimating the initial position of the target, and reduce complexity.

Optionally, in a case that the same terminal is allocated to two terminal sensing sub-areas, the same terminal participates in collaborative sensing in the two terminal sensing sub-areas in the manner of time division multiplexing, frequency division multiplexing, or code division multiplexing.

During implementation, UEs in different UE sensing sub-areas may overlap. For example, as shown in FIG. 8, UE3 may participate in sensing measurement in UE sensing sub-area 2 and may also participate in sensing measurement in UE sensing sub-area 3.

In this embodiment, one UE may be enabled to participate in collaborative sensing in at least two terminal sensing sub-areas in the manner of time division multiplexing, frequency division multiplexing, or code division multiplexing.

Optionally, the positioning sensing method further includes:

updating, by the computing node, the sensing node participating in collaborative sensing for the to-be-sensed target, where

the updating the sensing node participating in collaborative sensing includes at least one of the following:
adding a terminal, changing a terminal, deleting a terminal, adding a network-side device, changing a network-side device, and deleting a network-side device.

During implementation, the to-be-sensed target can be a moving target. When the to-be-sensed target moves out of the coverage of the current sensing node or moves to be close to the coverage of other sensing nodes, the sensing nodes participating in collaborative sensing can be updated, which helps overcome the problem that the track of the to-be-sensed target with a large moving range cannot be traced because the sensing range of the sensing node is limited.

Optionally, the updating, by the computing node, the sensing node participating in collaborative sensing for the to-be-sensed target includes at least one of the following:

updating, by the computing node, a network-side device participating in collaborative sensing for the to-be-sensed target under a first condition; and

updating, by the computing node, a terminal participating in collaborative sensing for the to-be-sensed target under a second condition.

The first condition includes at least one of the following:
It is determined based on a track of the to-be-sensed target that the to-be-sensed target is about to leave or has left a sensing sub-area corresponding to a network-side device;

it is determined based on a track of the to-be-sensed target that a distance between the to-be-sensed target and at least one network-side device participating in collaborative sensing exceeds a maximum sensing distance of a corresponding device and remaining network-side devices participating in collaborative sensing are not sufficient to provide a sensing result satisfying preset sensing quality of service QoS (for example, when the number of sensing base stations included in one base station sensing sub-area is 2, if the distance between one of the sensing base stations and the to-be-sensed target exceeds the maximum sensing distance of the base station, and the other sensing base station is not enough to provide sensing results that meet the preset sensing quality of service QoS);

a first measurement quantity result reported by a network-side device is less than a preset threshold, and the first measurement quantity result includes a Doppler frequency in the sensing measurement quantity result (for example, based on the current Doppler frequency measurement result, it is found that the to-be-sensed target spectrum peak power measured by the base station, or another measurement quantity result related to the Doppler frequency measurement (for example, the echo received power of the sensing/integrated communication and sensing signal/NR signal, or RSRP) is less than the preset threshold);

a first measurement quantity result reported by a terminal associated with a network-side device is less than a preset threshold;

a second measurement quantity result reported by a network-side device is less than a preset threshold, and the second measurement quantity result includes an APS in the sensing measurement quantity result (for example, based on the current channel APS/ADPS measurement result, it is found that the to-be-sensed target spectrum peak power measured by the base station, or another measurement quantity result related to the channel APS/ADPS measurement (for example, the echo received power of the sensing/integrated communication and sensing signal/NR signal, or RSRP) is less than the preset threshold);

a second measurement quantity result reported by a terminal associated with a network-side device is less than a preset threshold; and

it is determined based on a track of the to-be-sensed target that a span of a physical range of the track of the to-be-sensed target exceeds a preset threshold;

and/or

the second condition includes at least one of the following:

it is determined based on a track of the to-be-sensed target that the to-be-sensed target is about to leave or has left a sensing sub-area corresponding to a terminal;

it is determined based on a track of the to-be-sensed target that a distance between the to-be-sensed target and at least one terminal participating in collaborative sensing exceeds a maximum sensing distance of a corresponding terminal and remaining terminals participating in collaborative sensing are not sufficient to provide a sensing result satisfying preset sensing QoS;

a first measurement quantity result reported by a terminal is less than a preset threshold, and the first measurement quantity result includes a Doppler frequency in the sensing measurement quantity result (for example, based on the current Doppler frequency measurement result, it is found that the to-be-sensed target spectrum peak power of at least one UE in the collaborative sensing UE group, or another measurement quantity result related to the Doppler frequency measurement (for example, the echo received power of the uplink or downlink sensing/integrated communication and sensing signal/NR signal, or RSRP) is less than the preset threshold);

a second measurement quantity result reported by a terminal is less than a preset threshold, and the second measurement quantity result includes an APS in the sensing measurement quantity result (for example, based on the current channel APS/ADPS measurement result, it is found that the spectrum peak power of the to-be-sensed target of at least one UE in the collaborative sensing UE group, or another measurement quantity result related to the channel APS/ADPS measurement (for example, the echo received power of the sensing/integrated communication and sensing signal/NR signal, or RSRP) is less than the preset threshold);

it is determined based on a track of the to-be-sensed target that a span of a physical range of the track of the to-be-sensed target exceeds a preset threshold; and

switching between network-side devices participating in sensing is triggered.

In this embodiment, when the sensing distance, the sensing capability information, the measurement result, and the like of the sensing node participating in the to-be-sensed target cannot meet the sensing condition corresponding to the sensing demand information, an update of the network-side device and/or terminal participating in the sensing is initiated, to enable the sensing distance, the sensing capability information, the measurement result, and the like of the updated network-side device and/or terminal to meet the sensing condition corresponding to the sensing demand information.

In the embodiments of this application, obtaining, by a computing node, a sensing measurement quantity result, where the sensing measurement quantity result is obtained by performing, by a sensing node, signal processing on a first signal that is sent by the sensing node itself and that is reflected by a to-be-sensed target; and determining, by the computing node, a positioning sensing result of the to-be-sensed target based on the sensing measurement quantity result. In a sensing measurement process, all sensing measurement quantity results such as the angle and the power of the reflected signal that is reflected by the to-be-sensed target and that is received by the sensing node may adaptively change with the position, the movement speed, the movement direction, and the like of the to-be-sensed target. In this way, the computing node may perform calculation based on the sensing measurement quantity results measured and reported by the sensing node, to obtain positioning sensing results such as the position, the movement speed, the movement direction, and the movement track of the to-be-sensed target. Given that the sensing node may be any device that can receive the first signal sent by the sensing node itself and reflected by the to-be-sensed target, such as a base station, a terminal, a small cell, and a wireless sensing device that are existing, a communication device and a sensing device that are existing may be reused to perform wireless sensing positioning on the to-be-sensed target without a communication function, to improve the positioning sensing application range.

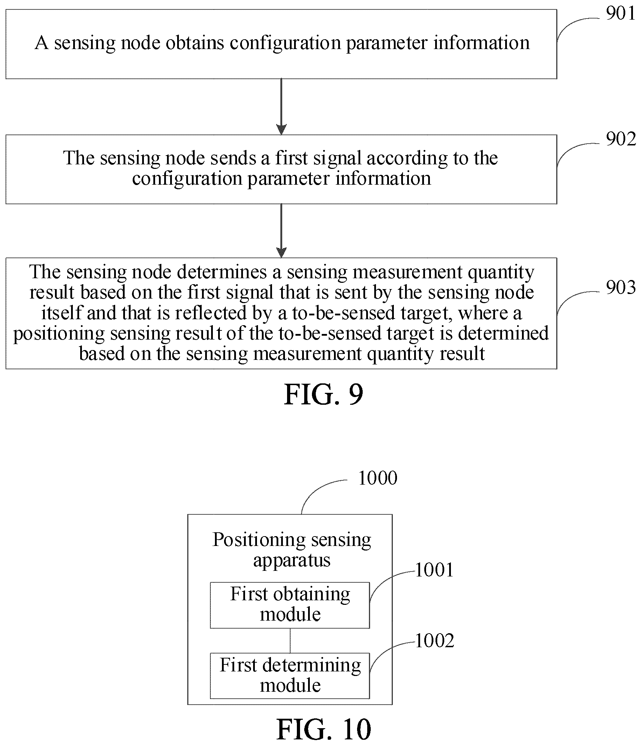

Referring to FIG. 9, a sensing measurement method provided in an embodiment of this application may be executed by a sensing node. The sensing node may be specifically any device capable of sending and receiving wireless sensing signals such as a first network-side device (for example, a base station) in a stationary state and/or a first device (for example, a terminal, a wireless sensing device, a small cell, and the like) in a stationary state, which is not specifically limited herein.

As shown in FIG. 9, the sensing measurement method may include the following steps:

Step 901: A sensing node obtains configuration parameter information.

In this step, the obtaining, by a sensing node, configuration parameter information may be receiving sensing demand information from a sensing network element, and determining configuration parameter information of first information based on the sensing demand information; or receiving, by the sensing node, configuration parameter information corresponding to sensing demand information from a sensing network element or another network-side device. In addition, the meanings of the configuration parameter information, the sensing demand information, and the sensing network element are respectively the same as the meanings of the configuration parameter information, the sensing demand information, and the sensing network element in the embodiment shown in FIG. 4, and are not repeated herein.

Step 902: The sensing node sends a first signal according to the configuration parameter information.

In this step, the first signal has the same meaning as that of the first signal in the embodiment shown in FIG. 4, and may be specifically an integrated communication/sensing signal, an NR reference signal, a newly designed sensing signal, or the like, which is not repeated herein.

Step 903: The sensing node determines a sensing measurement quantity result based on the first signal that is sent by the sensing node itself and that is reflected by a to-be-sensed target, where a positioning sensing result of the to-be-sensed target is determined based on the sensing measurement quantity result.

In this step, the first signal sent by the sensing node is reflected by the to-be-sensed target, so that the sensing node performs sensing measurement based on the echo, to obtain a sensing measurement quantity result that can be used to determine the positioning sensing result of the to-be-sensed target.

Optionally, the positioning sensing result includes at least one of the following:

an initial position of the to-be-sensed target;
a movement track of the to-be-sensed target;
a movement speed of the to-be-sensed target;
a current position of the to-be-sensed target; and
a future predicted position of the to-be-sensed target.

Optionally, a sensing measurement quantity includes at least one of the following:

a Doppler spectrum;
a Doppler frequency of a dynamic reflection path;
a change speed of a length of a dynamic reflection path;
a complete or partial value of an angle power spectrum APS of the first signal; and
a complete or partial value of an angle delay power spectrum ADPS of the first signal.

Optionally, the sensing measurement method provided in this embodiment of this application further includes: determining, by the sensing node, the Doppler frequency corresponding to the dynamic reflection path from the Doppler spectrum measured by the sensing node based on a power change feature of a Doppler spectrum peak/Doppler path.

Optionally, a movement speed and a movement direction of the to-be-sensed target are determined based on the Doppler frequency of the dynamic reflection path measured by at least two sensing nodes or a length change speed of the dynamic reflection path.

Optionally, the sensing measurement method provided in this embodiment of this application further includes: sending, by the sensing node, the sensing measurement quantity result to a computing node, where the computing node is configured to determine the positioning sensing result according to sensing measurement quantity results of all sensing nodes participating in sensing.

It should be noted that during implementation, the sensing node may locally determine the positioning sensing result after measuring the sensing measurement quantity result, or the sensing node may report the sensing measurement quantity result to the sensing network element, and the sensing network element is responsible for converting the sensing measurement quantity result to the sensing result, which is not specifically limited herein.

Optionally, the sensing measurement method provided in this embodiment of this application further includes: sending, by the sensing node, a weight to the computing node, where the weight is used for representing a confidence level of the sensing measurement quantity result of the sensing node.

It should be noted that in addition to sending the weight to the computing node, a sensing node can also send state information such as its own position, a method for determining its own position, the number of antennas, and the antenna array orientation to the computing node, so that the computing node can autonomously determine the weight of each sensing node according to the state information. This implementation corresponds to the implementation in which the computing node obtains the weight of each sensing node in the method embodiment shown in FIG. 4, and details are not repeated herein.

It is worth noting that in a scenario oriented to integrated communication and sensing, in the method embodiment provided in this application, a stationary UE (which may also be a base station, a small cell, a wireless sensing device, and the like) with sensing capabilities in a certain area is used to send the first signal to the to-be-sensed target and carry out collaborative measurement based on the echo, to trace the movement track of the to-be-sensed target. This method is device-free (device-free), and certainly can also be flexibly combined with a device-based (device-based) positioning method to improve sensing performance during implementation, for example, obtaining the initial position of the to-be-sensed target based on device-based. The sensing scenarios involved in this embodiment of this application are shown in FIG. 2 and FIG. 3. It is assumed that there are some stationary UEs in a cell, and these UEs can sense the track of the movement target in surrounding local areas while performing a communication/integrated communication and sensing service with a base station in an associated cell. A collaborative sensing node can be a base station or a UE. For a specific to-be-sensed target, the total number of sensing nodes is at least 2, for example, at least one base station and at least one UE, or at least two base stations, or at least two UEs. The moving to-be-sensed target can be a pedestrian or a vehicle.

The positioning sensing method provided by this application is different from the track sensing method of the existing positioning method, and has at least the following beneficial effects:

1. The positioning sensing method provided by this application can distribute the sensing computing power to an idle UE, to reduce the burden of computing power on the base station or the network, and has advantages in a scenario where UEs are dense or the sensing distance of the base station is limited. For example, if a signal sensed by the base station through the echo in a self-transmitting and self-receiving manner cannot meet the sensing QoS requirement when arriving at the to-be-sensed target and being then reflected back to the base station, there may be a collaborative sensing UE distributed around the to-be-sensed target, and a signal reflected by the to-be-sensed target and reaching the sensing UE can meet the sensing QoS requirement.

2. Compared with the continuous positioning based on the existing positioning method, the positioning sensing method provided by this application can greatly reduce the pilot frequency, and belongs to device-free sensing, and does not limit whether the to-be-sensed target is a UE with a communication function.

3. Compared with the single-station or multi-station radar continuous sensing (continuous distance measurement or angle measurement), the positioning sensing method provided by this application can be used as a supplementary method, and can be used in combination to improve accuracy. Certainly, the positioning sensing method provided by this application can also be used independently of the existing positioning method.

4. When the to-be-sensed target is also a UE (that is, with the ability to communicate with the base station), the positioning sensing method provided by this application can also be flexibly combined with the existing positioning method (for example, DL-AOD or UL-AOA), to further improve the accuracy of sensing.

To facilitate understanding and description, this application uses the following specific implementations to jointly describe the positioning sensing method and the sensing measurement method provided by this application:

The track tracing process may specifically include the following processes/steps:

1. Initiate a sensing demand.

During implementation, the sensing demand information may be sent by the sensing demand initiator to the core network (a sensing network function or a sensing network element). The sensing demand initiator may be the UE, or the base station, or the to-be-sensed target itself, or a third-party application server (relative to the access network and the core network). The meaning of the sensing demand information is the same as the meaning of the sensing demand information in the method embodiment shown in FIG. 4, and is not repeated herein.

2. Determine a base station participating in sensing/integrated communication and sensing service and a collaborative sensing UE.

In this process, the core network (sensing network function or sensing network element) can determine a UE and a base station participating in collaborative sensing according to the sensing demand information and state information reported by base stations and UEs. This process can specifically include the following sub-steps:

(2-1). The core network determines a base station participating in the sensing service according to the sensing demand information and the state information reported by the base stations.

For a certain sensing area where the to-be-sensed target is located, the number of base stations participating in the sensing may be one or more. In addition, the base station state information may include at least one of the following information: base station sensing capability indication information (for example, the maximum bandwidth and time-frequency resources of the base station that can be used to support sensing, the number of base station antennas, the maximum sensing distance of the base station, the maximum communication coverage distance of the base station, base station position information, base station position information determining method (or other information that can be equivalently used to represent the accuracy of the base station position), base station panel orientation and tilt information, beamforming configuration information, and the like).

(2-2). The base station that participates in sensing determined by the core network broadcasts control information carrying the sensing demand information and indicating a UE sending state information reporting request in the sensing area, so that the UE within coverage of the base station reports UE state information.

The core network determines a UE participating in the sensing service according to the sensing demand information and the state information reported by the UEs; or the base station participating in the sensing determines a UE participating in the sensing service according to the state information reported by the UEs; or the core network determines some UEs participating in the sensing service according to the state information reported by the UEs, and the base station participating in the sensing determines some other UEs participating in the sensing service according to the state information reported by the UEs. The UEs participating in the collaborative sensing may also be another type of sensing nodes with equivalent functions, such as small cells.

The UE state information may include: UE position information (namely, UE position coordinates), UE position information determining method (or equivalently, information representing the UE position accuracy), UE movement state indication (namely, whether the current UE is in a stationary state or not)), and UE panel orientation and tilt information.

Optionally, the UE state information may further include at least one of the following information: UE sensing capability indication information (for example, the maximum bandwidth and time-frequency resources of the UE that can be used to support sensing, the number of UE antennas, the maximum sensing distance of the UE, and the like), UE communication state indication (that is, whether a communication service is currently in progress), UE sensing state indication (for example, whether collaborative sensing is supported in the current time period, a time period in which collaborative sensing can be supported, whether the sensing service is currently in progress, and the like), UE beamforming configuration information, and the like.

(2-3). The base station reports the information about the determined UE participating in the collaborative sensing to the core network (a sensing network function or a sensing network element).

Based on the above sub-step (2-3), the information obtained by the core network (sensing network function or sensing network element) core network (sensing network function or sensing network element) should include at least one of the following: collaborative sensing UE ID, collaborative sensing UE position information, collaborative sensing UE position information determining method (or equivalently, information representing UE position accuracy), the total number of collaborative sensing UEs in the sensing area, state information of a collaborative sensing UE, and the like.

It should be noted that after the above steps 1) and 2, there may be a situation where some UEs participating in collaborative sensing lack position information. In this case, the core network initiates a positioning process for the some UEs to obtain UE position information. The positioning method may be an existing NR positioning method or another positioning method.

After the positioning process of the some UEs is completed and the position information of the some UEs is obtained, the base station or the UE reports the position information of the some UEs, a method for positioning the some UEs (or equivalently, the information representing the UE position accuracy), and the above-mentioned other state information of the some UEs to the core network. The core network finally determines all UEs participating in collaborative sensing.

It is worth mentioning that, it is assumed that the core network (sensing network function or sensing network element) has a uniform map coordinate system stored in advance, and the position information of all base stations, UEs and other sensing terminals participating in sensing in the sensing area adopts this coordinate system.

3. Based on the above steps 2 and 3, the core network (sensing network function or sensing network element) can determine the weights of equation (7) according to the state information reported by the base station and the UE, that is, the weights are used as measurement confidence levels of the sensing nodes.

Optionally, the base station and the UE can autonomously determine their own confidence levels according to their grasped state information, and report the confidence levels for reference or use by the core network.

4. Determine a participative sensing base station, and perform collaborative sensing UE grouping.

This step is completed by the core network (sensing network function or sensing network element), and ultimately aims to allocate a participative sensing base station and a collaborative sensing UE to the to-be-sensed target in the sensing area. The allocation of the base station and the UE may be the allocation to the same target in different sections of the track, or the allocation to different to-be-sensed targets.

An optional method is:

(4-1). Divide the sensing area into sensing sub-areas. A sensing sub-area is a smaller physical area within the sensing area. The division (position and size) of sensing sub-areas can be determined based on the number and density information of to-be-sensed targets in the sensing area in a sensing demand, and/or UE state information such as the maximum UE sensing distance, and/or the information about the UE participating in collaborative sensing in the sensing area grasped by the core network, and/or base station state information such as the maximum base station sensing distance and the maximum communication coverage distance, and/or the information about the base station participating in collaborative sensing in the sensing area grasped by the core network. If the above information is not available, division can be performed according to a preset default value (for example, even division is performed, or division is performed according to a historical track tracing service division result).

Optionally, the sensing sub-areas can be divided into two levels, and divided into sub-areas corresponding to the base station and sub-areas corresponding to the UE respectively (hereinafter respectively referred to as the base station sensing sub-areas and the UE sensing sub-areas). The sizes of the physical areas divided into the two levels may be different. Generally, the number of base stations is less than that of UEs, but the coverage is larger and can support a larger sensing distance. Therefore, the physical range of the base station sensing sub-area is generally larger than that of the UE sensing sub-area. One base station sensing sub-area may contain one or more UE sensing sub-areas, and the base station sensing sub-area may be physically discontinuous. As shown in FIG. 5, the sensing sub-area corresponding to base station 1 is a combined area of UE sensing area 1 and UE sensing area 2, that is, the sensing sub-area of base station 1 includes UE sensing area 1 and UE sensing area 2. The sensing sub-area of base station 2 only includes UE sensing sub-area 3. In addition, there may be a certain degree of overlap among the multiple UE sensing sub-areas and among the multiple base station sensing sub-areas that are obtained through division.

(4-2). Allocate a base station participating in sensing to each base station sensing sub-area, and allocate a group of collaborative sensing UEs to each UE sensing sub-area. The allocated UEs come from the set of base stations participating in sensing and collaborative sensing UEs determined in step 2.

Collaborative sensing UEs may be allocated to a UE sensing sub-area based on at least one of UE position information, UE sensing capability indication information, UE sensing state indication, and UE communication state indication in the UE state information. One sensing sub-area corresponds to one UE group, and the total number of collaborative sensing UEs in one UE group is at least 2.

One or more base stations participating in sensing may exist in the sensing area, and one or more base stations participating in sensing may also exist in one base station sensing sub-area. A participative sensing base station may be allocated to a base station sensing sub-area based on at least one of base station position information, base station sensing capability indication information, base station sensing state indication, and base station communication state indication in the base station state information.

A UE group is associated with a sensing base station, and the association basis may be at least one of the following: a base station sensing sub-area division result, a UE sensing sub-area division result, one or more items in the base station state information, and one or more items in the UE state information. The core network delivers the association result to the participative sensing base station. Optionally, the core network delivers the association result to the collaborative sensing UE group.

Optionally, considering the randomness of UE distribution, a case that some sensing sub-areas cannot have a sufficient number of collaborative sensing UEs may happen. In this case, the base station can schedule UEs in another UE group that approximately meets the sensing demand, and perform collaborative sensing in the manner of time division multiplexing (or frequency division multiplexing or code division multiplexing). As shown in FIG. 5, the black solid line box represents the sensing area, the blue dotted line box represents the three UE sensing sub-areas obtained through division, and the blue ellipse represents different collaborative sensing UE groups. For UE sensing sub-area 3, only UE 5 is available in this area. In this case, the network can configure UE 3 in the time division multiplexing sensing mode, that is, in some slots, UE 3 and other collaborative sensing UEs in UE group 2 trace the track of the to-be-sensed target 2, and in some other non-overlapping slots, UE3 collaborates with UE 5 in the UE group 3 to trace the track of the to-be-sensed target 3. Similarly, if the track of the same to-be-sensed target passes through the above-mentioned UE sensing sub-area 2 and UE sensing sub-area 3, the above-mentioned scheme of multiplexing some UEs for cross-sub-area collaborative sensing may also be adopted. For areas without base stations and UE coverage in the sensing area, the core network divides these areas into sensing blind zones.

5. The base station and the collaborative sensing UE configure sensing-related parameters.

In this step, after the network completes grouping of the collaborative sensing UEs, the sensing network function/sensing network element sends the configuration parameter information related to the sensing/integrated communication and sensing signal/NR reference signal to the base station participating in the sensing. The configuration parameter information of the UE can be transmitted by the sensing network function/sensing network element through NAS signaling; or the sensing network function/sensing network element may first send the configuration parameter information of the sensing/integrated communication and sensing signal to the base station participating in the sensing, and the base station then delivers the configuration parameter information to the UE.

For the specific meaning and content of the above configuration parameter information, reference may be made to the explanation in the method embodiment shown in FIG. 4, which will not be repeated herein.

6. The collaborative sensing UE and/or base station performs Doppler frequency measurement and reporting.

In this step, the collaborative sensing UE (or base station) performs Doppler frequency measurement. The measurement can use a newly designed sensing signal or integrated communication and sensing signal, or use a reference signal currently used in NR, such as a primary synchronization signal (Primary synchronization signal, PSS) and a secondary synchronization signal (Secondary Synchronization Signal, SSS) in a downlink synchronization signal and physical broadcast channel block (Synchronization Signals (SS) and Physical Broadcast Channel Block, SSB) and a demodulation reference signal (Demodulation Reference Signal, DMRS) carried in a PBCH, or use a downlink positioning reference signal (Downlink positioning Reference Signal, DL-PRS) and an uplink sounding reference signal (Sounding Reference Signal, SRS). The above sensing signal or integrated communication and sensing signal, or reference signal satisfies the continuous distribution in the time domain, and its distribution density determines the maximum Doppler frequency range that the UE can measure; and the duration of the used sensing/integrated communication and sensing signal/NR reference signal determines the resolution of the UE Doppler frequency. Based on the aforementioned sensing/integrated communication and sensing signal/NR reference signal, the UE obtains channel estimation on the time-frequency resource where the signal is located. The resulting channel estimation incorporates Doppler information on the dynamic reflection path caused due to movement of the to-be-sensed target. The algorithm used by the UE to estimate the Doppler frequency may be FFT (including zero-padded FFT), MUSIC algorithm, ESPRIT algorithm, Space-Alternating Generalized Expectation-maximization (Space-Alternating Generalized Expectation-maximization, SAGE) algorithm, or the like. The dynamic reflection path can be identified by identifying the power variation feature based on the Doppler frequency peak/Doppler path. After obtaining the measurement result, each UE reports the measurement result of the Doppler frequency or the change speed $v^n_{\text{path}}$ of the total length of the dynamic reflection path (according to equation (7)) calculated by itself to the base station.

Optionally, when measuring the Doppler frequency, the UE records and saves the measurement time stamp, and reports it to the base station together with the Doppler measurement result. If the conversion from measurement results to sensing results is in the core network (sensing network function or sensing network element), the base station reports the Doppler measurement result and measurement time stamp information of each UE to the core network. If the measurement is a periodic measurement (that is, the time interval between two vector measurements is the same, for example, when using periodic UL-SRS and DL-PRS signals), the measurement sequence number and measurement (sensing/integrated communication and sensing signal/NR reference signal) period instead of time stamp information can be reported.

It is worth noting that track tracing sensing involves multiple measurements of the Doppler frequency (or the change speed of the total length of the dynamic reflection path), and after being reported to the core network, the corresponding historical measurement results and corresponding time stamp information (or measurement sequence number and period) need to be stored in the core network according to the calculation accuracy demands, to facilitate subsequent further calculation and update of the to-be-sensed target track result.

7. The collaborative sensing UE and/or base station performs channel APS and/or ADPS measurement and reporting.

This step can be performed simultaneously with step 6 above. If only APS measurement is performed, the number of sensing nodes is at least 2; and if ADPS measurement can be performed, the number of such sensing nodes is at least 1. In addition, some sensing nodes can measure APS, and some other sensing nodes can measure ADPS.

The angle power spectrum APS and/or ADPS measurement method can be any of the following:

Case 1: The collaborative sensing UE performs channel APS and/or ADPS measurement.

In this case, the base station does not participate in channel APS measurement, and APS measurement is performed through two or more collaborative sensing UEs, or ADPS measurement is performed through one or more collaborative sensing UEs. Each UE reports the measured AOA APS/ADPS result to the base station and/or the core network.

Case 2: The collaborative sensing base station performs channel APS and/or ADPS measurement.

In this case, APS measurement is performed through two or more base stations, or ADPS measurement is performed through one or more base stations. Each base station reports the measured AOA APS/ADPS result to the core network (sensing network function/sensing network element).

Case 3: The collaborative sensing UE and the base station perform channel APS and/or ADPS measurement, and the UE and the base station report APS and/or ADPS measurement results.

This case can be understood as a combination of the above two cases, that is, the collaborative sensing UE will perform angle APS/ADPS measurement on the UE side, and the collaborative sensing base station will perform angle APS/ADPS measurement on the base station side. Each sensing node reports the measured AOA APS/ADPS result to the base station and/or the core network.

It should be noted that the above-mentioned APS/ADPS measurement of each sensing node can be implemented based on its own algorithm, or can be obtained based on the angle measurement method in the current NR positioning technology and the NR beam management idea:

Case 1

If it is implemented based on its own algorithm, the base station and the UE can use, based on a self-transmitted and self-received a sensing/integrated communication and sensing/NR reference signal, FFT (including zero padded FFT), a commonly used spatial domain filter such as a Bartlett beamformer (Bartlett Beamformer), a minimum variance distortionless response (Minimum Variance Distortionless Response, MVDR), MUSIC, and their improved algorithms.

Case 2

If it is based on the angle measurement in the current NR positioning technology and the NR beam management idea:

1). For AOA APS/ADPS (or AOD APS/ADPS, both are equivalent) on the base station side, the RSRP of each beam echo can be measured sequentially by sending downlink DL-PRS, SSB, and CSI-RS beams (beam scanning), to obtain the channel AOA APS/ADPS (or AOD APS/ADPS).

2). For AOA APS/ADPS (or AOD APS/ADPS, both are equivalent) on the UE side, if the UE has a beam scanning capability and a strong beamforming capability, UE can send the uplink SRS or UL-SRS (designed for NR positioning) beam, and measure the RSRP of the echo to obtain the channel AOA APS/ADPS (or AOD APS/ADPS).

It should be noted that in the case 2 above, the angle measurement in the current NR positioning technology and the NR beam management idea are not exactly the same as the NR positioning technology and NR beam management in the related technology, and only mean that the first signal sent by the sensing node in step 6 may be an NR reference signal in the related technology. For example, in the process of estimating Doppler and APS, PRS/SRS is used as the first sensing signal, which can make the embodiments of this application applicable to the NR network in the related technology.

It is worth noting that through the APS/ADPS measurement method described above, the overall APS/ADPS of the channel including the dynamic reflection path of the to-be-sensed target is obtained, that is, the obtained APS will have multiple spectrum peaks, including the spectrum peak of the LOS path, spectrum peaks of other static reflection paths, and the spectrum peak of the dynamic reflection path of the to-be-sensed target. In general, the spectrum peaks of the static reflection path and the dynamic reflection path do not overlap.

Optionally, to suppress or avoid the influence of the LOS path and other static reflection paths on the conversion process (step 7) from the measurement quantity result to the sensing result, during the track tracing sensing process, based on the results of multiple measurements performed using the above-mentioned APS/ADPS measurement method in the time domain, through detection of spectrum peak power fluctuations or other pattern recognition and machine learning methods, the corresponding spectrum peak of the dynamic reflection path can be identified and traced, and then the interference energy other than the spectrum peak of the dynamic reflection path is suppressed in subsequent measurements, where the reported APS is the APS result after interference energy suppression.

Optionally, the UE may choose to report the APS/ADPS result of the entire channel, or may choose to report the APS/ADPS result (obtained by measuring the historical APS/ADPS and identifying the spectrum peak of the dynamic reflection path) in a set angle (or angle and delay) range corresponding to the dynamic reflection path of the to-be-sensed target, to reduce the UE reporting overhead.

Optionally, the UE may choose to report the APS/ADPS result of the entire channel, or may choose to report the APS/ADPS result (obtained by measuring the historical APS/ADPS and identifying the spectrum peak of the dynamic reflection path) in a set angle (or angle and delay) range corresponding to the dynamic reflection path of the to-be-sensed target, to reduce the UE reporting overhead.

During implementation, when measuring the APS/ADPS, the UE can record and save the measurement time stamp, and report it to the base station together with the APS/ADPS measurement result. If the conversion from measurement results to sensing results is in the core network (sensing network function or sensing network element), the base station reports the APS/ADPS measurement result and measurement time stamp information of each UE to the core network. If the measurement is a periodic measurement (that is, the time interval between two vector measurements is the same, for example, when using periodic UL-SRS and DL-PRS signals), the measurement sequence number and measurement (sensing/integrated communication and sensing signal/NR reference signal) period instead of time stamp information can be reported.

In addition, track tracing sensing involves multiple measurements of the APS/ADPS, and after being reported to the core network, the corresponding historical measurement results and corresponding time stamp information (or measurement sequence number and period) need to be stored in the core network according to the calculation accuracy demands, to facilitate subsequent further calculation and update of the to-be-sensed target track result.

8. Convert a measurement quantity result to a sensing result.

After the above-mentioned nodes complete the channel APS/ADPS measurement, the APS/ADPS results can be saved locally or reported to the upstream node. For example, the UE reports the measured APS to the base station, or the base station reports the measured APS/ADPS and the received UE APS/ADPS measurement results to the core network (sensing network function or sensing network element), and the core network completes the final calculation and conversion from measurement quantity results to sensing results. Optionally, the base station may complete the calculation and conversion from measurement quantity results to sensing results according to the APS measured by itself and/or the received UE APS measurement result, as well as its own state information and UE state information stored by itself or delivered by the core network. For the convenience of description, the node that converts the measurement quantity result to the sensing result is hereinafter uniformly referred to as a computing node (which may be a core network or a base station).

Specifically, the process of converting a measurement quantity result to a sensing result may include:
(8-1). Determine the initial position of the track.

In general, the exact initial position of the to-be-sensed target is not known until the track tracing service is in process. According to different situations, the exact way to determine the initial position of the to-be-sensed target can be one of the following:

Manner 1: The to-be-sensed target is not required to be a UE, and the accurate initial position of the track of the to-be-sensed target is determined according to the measurement results in steps 6 and 7. If the calculation of the initial position of the track is completed in the core network (sensing network function or sensing network element), and the APS/ADPS measurement result in step 7 has been reported to the core network, the core network (sensing network function or sensing network element) can determine the approximate search range of the to-be-sensed target based on the prior information of the to-be-sensed target.

The prior information of the to-be-sensed target includes at least one of the following:

the approximate area of the initial position of the to-be-sensed target provided by the sensing service demander or another third party (other than the core network party and the access network party);
the approximate area determined by performing step 7 by the sensing node for the first time;
the last end position of the track of the to-be-sensed target in the area where the to-be-sensed target is located;
the sensing area map information and obstacle information pre-stored by the network;
an initial position probability map of the to-be-sensed target in the sensing area pre-stored by the network;
the position information of each UE in the collaborative sensing UE group (from the foregoing, it can be seen that the area where the UE group is located is generally smaller than the entire sensing area); and
the NR positioning result of the to-be-sensed target (if the to-be-sensed target is a UE).

After determining the approximate search range of the initial position of the to-be-sensed target, the computing node divides the search range into several search grid points. The size of the grid point is comprehensively determined according to the sensing capabilities of each collaborative sensing UE (for example, the number of antennas during UE angle measurement, sensing signal bandwidth, and the like).

It is sequentially assumed that the initial position of the to-be-sensed target is each grid point obtained through division, and according to the change speed $v_{\text{path}}$ of the dynamic reflection path of the to-be-sensed target in step 6, the speed vector $\boldsymbol{v}_{\text{obj}}$ of the to-be-sensed target is obtained based on equations (4) to (7) (where $\boldsymbol{v}_{\text{obj}}$ corresponds to $\boldsymbol{v}_{\text{person}}$ in equations (4) and (5)).

By combining the speed vector $\boldsymbol{v}_{\text{obj}}$ of the to-be-sensed target, the measurement time stamp information or the measurement period, and the positions of the above-mentioned grid points, the position coordinates of the to-be-sensed target during each measurement in step 6 can be sequentially obtained. Based on the position coordinates of the to-be-sensed target, the position coordinates of the participative sensing base station and/or the position coordinates of the collaborative sensing UE, the angle value (AOD or AOA) of the dynamic reflection path at the position coordinates of the to-be-sensed target on the side of the participative sensing base station and/or the side of the collaborative sensing UE is obtained.

The above angle value is substituted into equation (7) or equation (11), and the initial position confidence level $C^{i}_{\text{trace}}$ of the to-be-sensed target at the above grid point is further obtained based on equations (7) to (11). The computing node repeats the above calculations for all grid points, and uses the position coordinates of the grid point where the initial position confidence level $C^{i}_{\text{trace}}$ reaches the maximum value as the initial position of the track of the to-be-sensed target. The above step 7 can be executed immediately after step 6 and step 7 are executed for the first time, or can be executed after step 6 and step 7 are executed multiple times. In this case, the historical measurement results of historical step 6 and step 7 need to be saved for use in step 7.

Manner 2: The to-be-sensed target is required to be a UE, and the initial position of the to-be-sensed target is determined based on the NR positioning method.

In this manner, whether the to-be-sensed target is a UE is indicated in the sensing demand. When the to-be-sensed target is also a UE, the core network may decide to initiate positioning of the to-be-sensed target.

Manner 3: The to-be-sensed target is required to be a UE, and the initial position is determined by GPS; or the to-be-sensed target may not be required to be a UE, and the initial position is determined by a method such as Bluetooth (Bluetooth) or Ultra Wide Band (Ultra Wide Band, UWB).

It should be noted that any two or three of the foregoing manners 1 to 3 can be used in combination to further improve the sensing accuracy.

(8-2). Calculate the current position of the to-be-sensed target based on the set confidence level criterion.

The method described in step (8-1) can be carried out after the first measurement of track tracing sensing (step 6 and step 7 are completed for the first time). In addition, for the method 1 proposed in this patent, the core network (sensing network function or sensing network element) can re-invoke the stored Doppler frequency (or the change speed of the length of the dynamic reflection path) and the historical measurement result of the channel APS/ADPS during subsequent multiple measurements, to correct and update the estimated initial position of the track and overall track coordinates.

The current position of the to-be-sensed target is jointly determined based on the initial position determined in step (8-1), historically calculated values of one or more speed vectors $\boldsymbol{v}_{\text{obj}}$ of the to-be-sensed target, and the currently measured APS/ADPS. Strictly speaking, whenever APS/ADPS measurement is newly added, the track is updated once and the current position coordinates of the to-be-sensed target are determined.

In addition, for the current measurement, the position coordinates of the to-be-sensed target at the next measurement moment may be predicted based on the currently calculated position of the to-be-sensed target and the speed vector $\boldsymbol{v}_{\text{obj}}$ of the to-be-sensed target.

The confidence level criterion is the position confidence level and the initial position confidence level of the to-be-sensed target involved in equations (7) to (11), and the weight of each collaborative sensing UE. The weight of the collaborative sensing UE can be a fixed value during the entire track tracing sensing service process, or can be dynamically adjusted; and the situation of dynamic adjustment occurs when the sensing resources (including time-domain, frequency-domain and space-domain resources) of the collaborative sensing UE need to be sent and reconfigured, or when the to-be-sensed target enters or leaves the optimal sensing range of the collaborative sensing UE. The adjustment of the weight of the collaborative sensing UE (that is, the confidence level of the measurement quantity result) is decided and completed by the core network.

9. Forward a sensing result.

The track tracing sensing service corresponds to a continuous period of time. According to the sensing demands, the sensing results can be fed back in real time, or fed back as a whole after the track tracing sensing is completed. After the sensing service starts, after steps 1 to 5 are executed, steps 6 and 7 need to be executed repeatedly to generate and output the current position of the to-be-sensed target (and the predicted position of the to-be-sensed target at the next moment).

During implementation, if track tracing sensing results need to be fed back in real time, whenever step 7 is completed once, the computing node sends the current latest track tracing sensing result (which can be the result of the current position of the to-be-sensed target, or can be the result containing the historic track of the to-be-sensed target) to the sensing demander through the core network; and if the track tracing sensing service is completed and then the track results are fed back as a whole, the core network temporarily stores the historical track tracing results and sends the historical track tracing results to the sensing demander when the sensing service is over.

It should be noted that the above track tracing process is only an example. During implementation, there may be more or fewer steps than those in the above process. For example, the network may choose not to perform step 6. In this case, FIG. 5 is changed into a case that based on self-transmitting and self-receiving sensing signals, the sensing nodes collaborate to carry out the process of a continuous positioning service. The method described in this patent is also suitable for this case.

In another example, in the above track tracing process, considering that the base station participating in sensing and the collaborative sensing UE may not be guaranteed to maintain a stable available state in the entire track tracing sensing service, the network may trigger some additional processing procedures. where the so-called stable available state means that both the base station participating in sensing and the collaborative sensing UE meet a condition required for collaborative sensing during the entire track tracing process, for example, a condition that the UE remains stationary, or a condition that the base station and/or the UE maintains its own stable sensing ability. In view of this situation, the following three embodiments are used for supplementary explanation.

Embodiment 1

Collaborative sensing UE groups and/or participative sensing base stations switch (for example, switching between sensing nodes is triggered due to the movement of the to-be-sensed target or the change of the sensing environment).

From the description of the specific steps of track tracing above, it can be learned that because the target moves when the sensing service is in process, the target may leave the sensing range of the original collaborative sensing UE group. In this case, the network needs to allocate a new collaborative sensing UE group or even allocate a new participative sensing base station to the to-be-sensed target. The new collaborative sensing UE group may include some UEs in the original collaborative sensing UE group. When allocating a new sensing base station, a new collaborative sensing UE group can be allocated simultaneously, or the original collaborative sensing UE group can be used, that is, the core network re-associates a collaborative sensing UE with the base station.

The condition for triggering switching between the base stations participating in the sensing may be at least one of the following:

[1]. Based on the track sensing result of the current to-be-sensed target (the track includes the position), it is found that the to-be-sensed target is about to leave or has left the sensing sub-area corresponding to the current base station.

[2]. Based on the track sensing result of the current to-be-sensed target (the track includes the position), it is found that the distance between the to-be-sensed target and at least one of base stations currently participating in sensing exceeds the maximum sensing distance of the base station, and the remaining base stations in the group are not enough to provide sensing results that meet the predetermined sensing QoS.

[3]. Based on the current channel APS/ADPS measurement result, it is found that the to-be-sensed target spectrum peak power measured by the base station, or another measurement quantity result related to the channel APS/ADPS measurement (for example, the echo received power of the sensing/integrated communication and sensing signal/NR signal, or RSRP) is less than the preset threshold.

[4]. Based on the current Doppler frequency measurement result, it is found that the to-be-sensed target spectrum peak power measured by the base station, or another measurement quantity result related to the Doppler frequency measurement (for example, the echo received power of the sensing/integrated communication and sensing signal/NR signal, or RSRP) is less than the preset threshold.

[5]. Based on the track sensing result of the current to-be-sensed target, it is found that a span of a physical range of the track of the to-be-sensed target exceeds a preset threshold.

The condition for triggering switching between the collaborative sensing UE groups may be at least one of the following:

a) Based on the track sensing result of the current to-be-sensed target (the track includes the position), it is found that the to-be-sensed target is about to leave or has left the sensing sub-area corresponding to the current collaborative sensing UE group.

b) Based on the track sensing result of the current to-be-sensed target (the track includes the position), it is found that the distance between the to-be-sensed target and at least one UE in the current collaborative sensing UE group exceeds the maximum sensing distance of the UE, and the remaining UEs in the group are not enough to provide sensing results that meet the predetermined sensing QoS.

c) Based on the current channel APS/ADPS measurement result, it is found that the spectrum peak power of the to-be-sensed target of at least one UE in the collaborative sensing UE group, or another measurement quantity result related to the channel APS/ADPS measurement (for example, the echo received power of the sensing/integrated communication and sensing signal/NR signal, or RSRP) is less than the preset threshold.

d) Based on the current Doppler frequency measurement result, it is found that the to-be-sensed target spectrum peak power of at least one UE in the collaborative sensing UE group, or another measurement quantity result related to the Doppler frequency measurement (for example, the echo received power of the uplink or downlink sensing/integrated communication and sensing signal/NR signal, or RSRP) is less than the preset threshold.

e) Based on the track sensing result of the current to-be-sensed target, it is found that a span of a physical range of the track of the to-be-sensed target exceeds a preset threshold.

f) Switching between base stations participating in sensing is triggered.

The condition for triggering switching between the base stations participating in the sensing has the same meaning as that of the first condition in the method embodiment shown in FIG. 4, and the condition for triggering switching between the collaborative sensing UE groups has the same meaning as that of the second condition in the method embodiment shown in FIG. 4, which will not be repeated herein.

The process of switching between participative sensing base stations is specifically as follows:

(1) When the switching condition is satisfied, switching between participative sensing base stations is triggered.

If the node that detects the trigger condition is the original sensing base station (for example, [3] and [4] of the above trigger conditions), the original base station sends a sensing base station switching request to the core network.

The node that detects the trigger condition can also be the core network (for example, [1], [2] and [5] of the above trigger conditions).

(2) Option 1: The core network determines a new participative sensing base station (optionally, the above steps 2, 4, and 5 can be performed), and sends a sensing switching preparation indication to the new sensing base station.

Alternatively,

Option 2: The core network determines a new participative sensing base station (optionally, the above steps 2, 4, and 5 can be performed), and sends the ID of the new sensing base station to the original sensing base station, and the original sensing base station sends a sensing switching preparation indication to the new sensing base station.

(3) Option 1: The new sensing base station and the collaborative sensing UE group prepare for switching, and after completion, report a switching preparation success indication to the core network.

Option 2: The new sensing base station and the collaborative sensing UE group prepare for switching, and after completion, send a switching preparation success indication to the original sensing base station and the core network.

After receiving the switching preparation success indication, the core network sends a sensing start indication to the new sensing base station and its associated collaborative sensing UE group.

(4) The new sensing base station and the collaborative sensing UE group perform sensing, and report the sensing measurement quantity results to the core network (the above steps 6 and 7 are performed).

Optionally, at least one of the new sensing base station and the new collaborative sensing UE group sends a sensing start indication response to the core network.

(5) After receiving the sensing measurement quantity result or the sensing start indication response reported by the new collaborative sensing UE group, the core network sends a sensing stop indication (which may be delivered through NAS signaling or through the base station) to some or all UEs in the original collaborative sensing UE group.

(6) After receiving the sensing stop indication, some or all UEs in the current collaborative sensing UE group stop sensing measurement and complete the switching.

The process of switching between collaborative sensing UE groups may specifically include:

(1) When the switching condition is satisfied, switching between collaborative sensing UE groups is triggered.

If the node that detects the trigger condition is a collaborative sensing UE and/or a participative sensing base station (for example, c) and d) of the above trigger conditions), the corresponding UE and/or base station sends a sensing UE group switching request to the core network.

The node that detects the trigger condition can also be the core network (for example, the above conditions a), b), and e).

(2) The core network determines a new collaborative sensing UE group (optionally, the above steps 2 to 5 can be performed), and sends a sensing start indication (which can be delivered through NAS signaling or through the base station) to the new collaborative sensing UE group.

(3) The new collaborative sensing UE group performs collaborative sensing, and reports the sensing measurement quantity result (the above steps 6 and 7 are performed).

Optionally, a UE in the new collaborative sensing UE group sends a sensing start indication response to the core network.

(4) After receiving the sensing measurement quantity result or the sensing start indication response reported by the new collaborative sensing UE group, the core network sends a sensing stop indication (which may be delivered through NAS signaling or through the base station) to some or all UEs in the original collaborative sensing UE group.

(5) After receiving the sensing stop indication, some or all UEs in the current collaborative sensing UE group stop sensing measurement and complete the switching.

It is worth noting that if the to-be-sensed target enters the sensing blind zone (based on the track tracing result and the blind zone division result in step (4)), the to-be-sensed target can trigger the track tracing sensing service to end, or switch to another track tracing sensing process (for example, track tracing performed based on self-transmitting and self-receiving a sensing signal by a sensing node, or continuous positioning in NR, or track tracing based on GPS/Bluetooth/UWB).

Embodiment 2

A collaborative sensing UE fails and supplementation is performed (for example, the collaborative sensing cannot be continued due the own reason of the UE).

During a track tracing sensing service, due to the own reason of the collaborative sensing UE, it may be impossible to continue to support the collaborative sensing. In this case, the network needs to determine whether a collaborative sensing UE fails and remove the failed collaborative sensing UE. If necessary, UE supplementation also needs to be performed on the current collaborative sensing UE group.

The condition for triggering a collaborative sensing UE to fail may be at least one of the following:
The collaborative sensing UE moves, which no longer satisfies the premise of this patent method;

the collaborative sensing UE is interrupted by higher priority services and cannot continue to support collaborative sensing;
sensing/integrated communication and sensing resources of the collaborative sensing UE are limited, and cannot meet the requirements of collaborative sensing capabilities; and
the collaborative sensing UE actively initiates a request for interruption of collaborative sensing.

If the number of UEs in the original collaborative sensing UE group does not meet the minimum number requirement after a UE fails, UE supplementation needs to be performed on the collaborative sensing group. Optionally, if there is a new UE in the sensing area that can be used for collaborative sensing, the network can also perform UE supplementation.

The specific collaborative sensing UE failure and supplementation process is as follows:

(1) The failure condition is met, and the relevant UE sends a sensing UE failure indication to the core network.
(2) The core network receives the sensing UE failure indication, and determines a new available collaborative sensing UE (optionally, the above steps 2 to 5 can be performed); and sends a sensing stop indication to the failed UE.
(3) If there is a new available collaborative sensing UE currently and supplementation needs to be performed, the core network sends a sensing start indication (which can be delivered through NAS signaling or through the base station) to the newly determined collaborative sensing UE.

Embodiment 3

A measurement confidence level of a collaborative sensing UE and/or a base station is adjusted.

During a sensing service, the measurement confidence level of the collaborative sensing UE is reflected by the weight of equation (7). The measurement confidence level of the UE affects the accuracy of the final comprehensive result. To obtain a more accurate track tracing result, a corresponding weight can be dynamically adjusted.

The condition under which the weight changes may include at least one of the following:

The available sensing resources of the collaborative sensing UE may change. For example, in a sensing service, the UE obtains more time-domain (corresponding to occupying more symbols in the time domain for sensing/integrated communication and sensing signal/NR reference signal transmission)/frequency-domain (corresponding to obtaining larger sensing/integrated communication and sensing bandwidth)/space-domain (corresponding to obtaining more antenna ports/antennas for sensing/integrated communication and sensing) resources (or fewer resources), and its sensing capabilities change.

According to the principle of the method described in this patent, the accuracy of the measurement quantity result of the collaborative sensing UE is related to the position accuracy of the collaborative sensing UE. If the collaborative sensing UE uses a more accurate positioning method to update its own position, the measurement confidence level of the UE also needs to be adjusted.

According to the principle of the method described in this patent, the accuracy of the measurement quantity result of the collaborative sensing UE is related to the position of the to-be-sensed target. For example, for Doppler frequency measurement, when the distance between the to-be-sensed target and the base station and each collaborative sensing UE meets the far-field condition, the measurement accuracy is higher; and for APS/ADPS measurement, when the to-be-sensed target is in the position facing the multi-antenna panel of the UE, the measurement accuracy is higher.

The accuracy of the measurement quantity result of the collaborative sensing UE is also related to the signal-to-noise ratio (Signal Noise Ratio, SNR) on the collaborative sensing UE side. For example, a higher SNR measured on the UE indicates higher measurement accuracy and a higher corresponding measurement confidence level.

Based on the definition of equation (7), it can be seen that the measurement confidence level of each UE in the collaborative sensing UE group needs to ensure that the position confidence level of the to-be-sensed target is maintained within a preset range during the entire track tracing process. When the situations of Embodiment 1 and Embodiment 2 occur, the number of UEs in the group may change, and in this case, the weights corresponding to all UEs in the group need to be adjusted as a whole.

The adjustment of the measurement confidence level can be completed by reporting the updated weight recommendation value to the core network by each sensing node, or can be completed by the core network through autonomous adjustment.

Embodiment 4

Positioning and track tracing are enhanced in combination with existing technologies.

The biggest problem of existing outdoor GPS positioning and track tracing is that it is easily blocked by high-rise buildings, resulting in weak GPS signals, which in turn leads to low positioning accuracy in some areas or low track tracing accuracy on some road sections, and even GPS positioning and track tracing services cannot be performed. On the other hand, the existing 3GPP positioning solution is limited by the large deployment distance between outdoor macro stations, and the positioning accuracy is also relatively limited. The method described in this patent can use the unblocked GPS position as the initial position to implement continuous positioning and track tracing of a to-be-sensed target in a GPS signal blockage or weak-coverage area, which is a supplement to existing track tracing methods.

Specifically, for a GPS signal blockage or weak-coverage area, it is generally considered that base stations and UEs are still sufficiently densely distributed. When the to-be-sensed target is about to enter the GPS signal blockage or weak-coverage area, it can switch to track tracing sensing of the method described in this patent. In this case, the GPS positioning information of the to-be-sensed target can be used as the initial position information of track tracing of this method. After the to-be-sensed target moves out of the GPS signal weak-coverage area, it can switch back to GPS track tracing. Through this method, the overall performance of the track tracing service is improved.

The above embodiment provides a track tracing sensing method based on inter-device collaboration that is different from the existing NR positioning. It utilizes stationary UEs or base stations around the to-be-sensed target, to implement the device-free track sensing of the to-be-sensed target by self-transmitting and self-receiving sensing signals and measuring Doppler and angle power spectrum. In this embodiment, the specific implementation steps of the positioning sensing process are proposed, the necessary signaling interaction process between the collaborative sensing UE, the base station and the sensing network function in the core network is proposed, and the switching method and process of the collaborative UE and the collaborative base station are also proposed, which can support positioning sensing for to-be-sensed targets without communication capabilities.

The positioning sensing method provided in this embodiment of this application may be executed by a positioning sensing apparatus. In the embodiments of this application, a positioning sensing apparatus provided in the embodiments of this application is described using an example in which a positioning sensing apparatus executes the positioning sensing method.

Referring to FIG. 10, the positioning sensing apparatus 1000 provided by this embodiment of this application can be applied to a computing node. The computing node has the same meaning as that of the execution subject of the method embodiment shown in FIG. 4, and details are not repeated herein. As shown in FIG. 10, the positioning sensing apparatus 1000 may include the following modules:

a first obtaining module 1001, configured to obtain a sensing measurement quantity result, where the sensing measurement quantity result is obtained by performing, by a sensing node, signal processing on a first signal that is sent by the sensing node itself and that is reflected by a to-be-sensed target; and

a first determining module 1002, configured to determine a positioning sensing result of the to-be-sensed target based on the sensing measurement quantity result.

Optionally, the computing node includes a sensing network element.

Optionally, the positioning sensing apparatus 1000 further includes:

a second obtaining module, configured to obtain first information, where the first information includes: positioning sensing demand information of the to-be-sensed target and position information of the sensing node; and

a second determining module, configured to determine the sensing node according to the first information.

Optionally, the positioning sensing apparatus 1000 further includes:

a fourth sending module, configured to send configuration parameter information to the sensing node, where the first signal sent by the sensing node is determined through the configuration parameter information.

Optionally, the positioning sensing result includes at least one of the following:

an initial position of the to-be-sensed target;

a movement track of the to-be-sensed target;

a movement speed of the to-be-sensed target;

a current position of the to-be-sensed target; and

a future predicted position of the to-be-sensed target.

Optionally, a sensing measurement quantity includes at least one of the following:

a Doppler spectrum;

a Doppler frequency of a dynamic reflection path;

a change speed of a length of a dynamic reflection path;

a complete or partial value of an angle power spectrum APS of the first signal; and

a complete or partial value of an angle delay power spectrum ADPS of the first signal.

Optionally, the first determining module 1002 is specifically configured to:

determine first positioning information of the to-be-sensed target according to a Doppler frequency of a dynamic reflection path measured by each sensing node at least once, where the first positioning information includes at least one of the following: a movement speed magnitude and a movement direction.

Optionally, when the sensing measurement quantity includes the APS, the number of sensing nodes is at least two; and

when the sensing measurement quantity includes the ADPS, the number of sensing nodes is at least one.

Optionally, the positioning sensing apparatus 1000 further includes:

a third obtaining module, configured to obtain an initial position of the to-be-sensed target, where

the first determining module 1002 is specifically configured to:

determine at least one of a current movement track, a current position, and a future predicted position of the to-be-sensed target based on the initial position and the first positioning information.

Optionally, the above-mentioned third obtaining module includes:

a first determining unit, configured to determine a search area for the initial position of the to-be-sensed target according to prior information of the to-be-sensed target;

a second determining unit, configured to determine an initial position confidence level of each candidate position of the to-be-sensed target in the search area according to an APS/ADPS result measured at least once and reported by each sensing node, where the initial position confidence level represents a possibility that the candidate position is an actual initial position of the to-be-sensed target; and

a third determining unit, configured to determine a candidate position corresponding to an initial position confidence level with a maximum value as the initial position of the to-be-sensed target.

Optionally, the prior information includes at least one of the following:

an estimated area in which the to-be-sensed target is located and that comes from a third party;

position information of the to-be-sensed target measured by the sensing node for a first time;

a final position of a movement track of the to-be-sensed target measured by a third sensing node for a last time;

map information of an environment in which the to-be-sensed target is located;

an initial position probability map of the to-be-sensed target;

position information of the sensing node participating in sensing; and

an estimation position of the to-be-sensed target determined based on another positioning method.

Optionally, the above-mentioned second determining unit includes:

a first determining subunit, configured to determine an estimation movement track of the to-be-sensed target according to the movement speed magnitude and the movement direction of the to-be-sensed target;

a second determining subunit, configured to assume that the initial position of the to-be-sensed target is a first candidate position in the search area, and determine, based on the first candidate position and the estimation movement track, an angle of arrival and/or an angle of departure of a dynamic reflection path corresponding to each track point on the estimation movement track;

a third determining subunit, configured to determine a track position confidence level of each track point of the to-be-sensed target on the estimation movement track according to second information, where the second information includes: the angle of arrival and/or the angle of departure of the dynamic reflection path corresponding to each track point on the estimation movement track, and an APS/ADPS that is measured by the sensing node; and

a fourth determining subunit, configured to determine an initial position confidence level corresponding to the first candidate position according to a position confidence level corresponding to each track point on the estimation movement track.

Optionally, the APS/ADPS result measured and reported by the sensing node includes any one of the following:

a complete APS/ADPS measured by the sensing node;

a partial APS/ADPS corresponding to a reflection path spectrum peak measured by the sensing node; and

an APS/ADPS value that corresponds to target angle of arrival/angle of departure information indicated by the sensing network element and that is measured by the sensing node.

Optionally, in a case that the quantity of sensing nodes is greater than 1, the positioning sensing apparatus 1000 further includes:

a fifth obtaining module, configured to obtain a weight of each sensing node, where the weight is used for representing a measurement quantity result confidence level of the corresponding sensing node; and

the second information further includes: the weight of each sensing node; and the track position confidence level is positively correlated with a first value of each sensing node, and the first value is a product of the weight of the corresponding sensing node and an APS/ADPS value.

Optionally, the positioning sensing demand information includes at least one of the following:

a sensing area, a to-be-sensed target type, a to-be-sensed target identifier, quality of service QoS information, the minimum quantity of sensing nodes, the quantity and density of to-be-sensed targets in a sensing area, a sensing result feedback manner, a positioning sensing start condition, and a positioning sensing end condition.

Optionally, the positioning sensing start condition includes at least one of the following:

an initiator of the positioning sensing demand information initiates a sensing service start request;

the to-be-sensed target reaches a preset geographic area;

historical position information of the to-be-sensed target is obtained through another positioning method; and

a preset start time of a sensing service corresponding to the positioning sensing demand information is reached.

Optionally, the positioning sensing end condition includes at least one of the following:

an initiator of the positioning sensing demand information initiates a sensing service stop request;

a prescribed time for a sensing service is reached;

a predetermined quantity of measurement times for a sensing service is reached;

the to-be-sensed target stops moving, and a stop time reaches a preset time threshold;

the to-be-sensed target reaches or leaves a preset geographic area; and

a sensing node participating in collaborative sensing is unable to continue to provide a collaborative sensing service, and none of sensing nodes in the sensing area satisfies a corresponding collaborative sensing condition.

Optionally, the second determining module is specifically configured to:

allocate the sensing node participating in collaborative sensing to the to-be-sensed target from determined sensing nodes participating in a collaborative sensing service.

Optionally, the second determining module includes:

an allocation unit, configured to allocate a corresponding sensing node to each sensing sub-area, where the sensing sub-areas are areas with smaller physical ranges obtained by dividing a sensing area; and
a fourth determining unit, configured to determine that the sensing nodes include a sensing node corresponding to a sensing sub-area in which the to-be-sensed target is located.

Optionally, the sensing sub-areas include: network-side device sensing sub-areas and terminal sensing sub-areas, where at least one network-side device is allocated to one of the network-side device sensing sub-areas, at least one terminal is allocated to one of the terminal sensing sub-areas, and one of the network-side device sensing sub-areas covers at least one of the terminal sensing sub-areas; and

the positioning sensing apparatus 1000 further includes:
an associating module, configured to associate a network-side device allocated to one of the network-side device sensing sub-areas with a terminal allocated to at least one of the terminal sensing sub-areas.

Optionally, in a case that the same terminal is allocated to two terminal sensing sub-areas, the same terminal participates in collaborative sensing in the two terminal sensing sub-areas in the manner of time division multiplexing, frequency division multiplexing, or code division multiplexing.
Optionally, the positioning sensing apparatus 1000 further includes:

an update module, configured to update the sensing node participating in collaborative sensing for the to-be-sensed target, where
the updating the sensing node participating in collaborative sensing includes at least one of the following:
adding a terminal, changing a terminal, deleting a terminal, adding a network-side device, changing a network-side device, and deleting a network-side device.

Optionally, the update module is specifically configured to perform at least one of the following:

update a network-side device participating in collaborative sensing for the to-be-sensed target under a first condition; and
update a terminal participating in collaborative sensing for the to-be-sensed target under a second condition.

Optionally, the first condition includes at least one of the following:

it is determined based on a track of the to-be-sensed target that the to-be-sensed target is about to leave or has left a sensing sub-area corresponding to a network-side device;
it is determined based on a track of the to-be-sensed target that a distance between the to-be-sensed target and at least one network-side device participating in collaborative sensing exceeds a maximum sensing distance of a corresponding device and remaining network-side devices participating in collaborative sensing are not sufficient to provide a sensing result satisfying preset sensing quality of service QoS;
a first measurement quantity result reported by a network-side device is less than a preset threshold, and the first measurement quantity result includes a Doppler frequency in the sensing measurement quantity result;
a first measurement quantity result reported by a terminal associated with a network-side device is less than a preset threshold;
a second measurement quantity result reported by a network-side device is less than a preset threshold, and the second measurement quantity result includes an APS in the sensing measurement quantity result;
a second measurement quantity result reported by a terminal associated with a network-side device is less than a preset threshold; and
it is determined based on a track of the to-be-sensed target that a span of a physical range of the track of the to-be-sensed target exceeds a preset threshold;
and/or
the second condition includes at least one of the following:

it is determined based on a track of the to-be-sensed target that the to-be-sensed target is about to leave or has leaved a sensing sub-area corresponding to a terminal;
it is determined based on a track of the to-be-sensed target that a distance between the to-be-sensed target and at least one terminal participating in collaborative sensing exceeds a maximum sensing distance of a corresponding terminal and remaining terminals participating in collaborative sensing are not sufficient to provide a sensing result satisfying preset sensing QoS;
a first measurement quantity result reported by a terminal is less than a preset threshold, and the first measurement quantity result includes a Doppler frequency in the sensing measurement quantity result;
a second measurement quantity result reported by a terminal is less than a preset threshold, and the second measurement quantity result includes an APS in the sensing measurement quantity result;
it is determined based on a track of the to-be-sensed target that a span of a physical range of the track of the to-be-sensed target exceeds a preset threshold; and
switching between network-side devices participating in sensing is triggered.
Optionally, the configuration parameter information includes at least one of the following:

waveform, subcarrier spacing, bandwidth, Burst duration, intra-Burst signal time interval, inter-Burst time interval, transmitted signal power, signal format, signal direction, time resource, frequency resource, antenna/antenna port index and number, and quasi-co-location QCL relationship; and
the Burst includes a group of signals sent continuously in the time domain.

Optionally, the first information further includes state information of the sensing node.
Optionally, the state information includes at least one of the following:
sensing capability indication information, antenna orientation and tilt information, beamforming configuration information, position information, a determining method for the position information, a movement state indication, a communication state indication, and a sensing state indication.
Optionally, the second determining module includes:

a fifth determining unit, configured to determine that the sensing node includes a first network-side device according to the positioning sensing demand information and state information of network-side devices;
a first sending unit, configured to send the positioning sensing demand information to the first network-side device; and
a first receiving unit, configured to receive third information from the first network-side device, and determining based on the third information that the sensing node further includes a first device, where the first network-side device determines the first device participating in the collaborative sensing of the to-be-sensed target according to the positioning sensing demand information and state information of an associated device, and the third information is used to indicate that the first device participates in the collaborative sensing corresponding to the positioning sensing demand information.

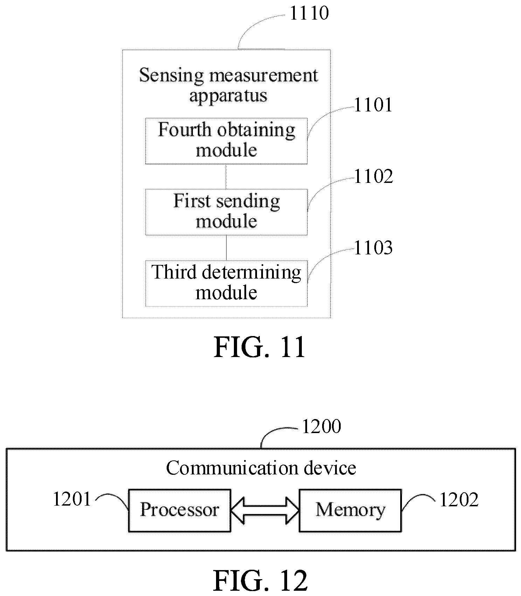

Optionally, the third information further includes at least one of the following:
the identifier of the first device, the position information of the first device, the method for determining the position information of the first device, the number of the first devices, and the state information of the first device.
The positioning sensing apparatus 1000 provided in this embodiment of this application can execute the steps performed by the computing node in the method embodiment shown in FIG. 4, and can achieve the same beneficial effect. To avoid repetition, details are not described herein again.
The positioning sensing apparatus 1000 in this embodiment of this application may be an electronic device such as an electronic device with an operating system, or may be a component in an electronic device such as an integrated circuit or a chip. The electronic device may be a core network, for example, a sensing network function/sensing network element in the core network.
The sensing measurement method provided in this embodiment of this application may be executed by a sensing measurement apparatus. In the embodiments of this application, a sensing measurement apparatus provided in the embodiments of this application is described using an example in which a sensing measurement apparatus executes the sensing measurement method.
Referring to FIG. 11, the sensing measurement device 1100 provided by this embodiment of this application can be applied to a sensing node. The sensing node has the same meaning as that of the execution subject of the method embodiment shown in FIG. 9, and details are not repeated herein. As shown in FIG. 11, the sensing measurement device 1100 may include the following modules:

a fourth obtaining module 1101, configured to obtain configuration parameter information;
a first sending module 1102, configured to send a first signal according to the configuration parameter information; and
a third determining module 1103, configured to determine a sensing measurement quantity result based on the first signal that is sent by the first sending module itself and that is reflected by a to-be-sensed target, where a positioning sensing result of the to-be-sensed target is determined based on the sensing measurement quantity result.

Optionally, the positioning sensing result includes at least one of the following:

an initial position of the to-be-sensed target;
a movement track of the to-be-sensed target;
a movement speed of the to-be-sensed target;
a current position of the to-be-sensed target; and
a future predicted position of the to-be-sensed target.

Optionally, a sensing measurement quantity includes at least one of the following:

a Doppler spectrum;
a Doppler frequency of a dynamic reflection path;
a change speed of a length of a dynamic reflection path;
a complete or partial value of an angle power spectrum APS of the first signal; and
a complete or partial value of an angle delay power spectrum ADPS of the first signal.

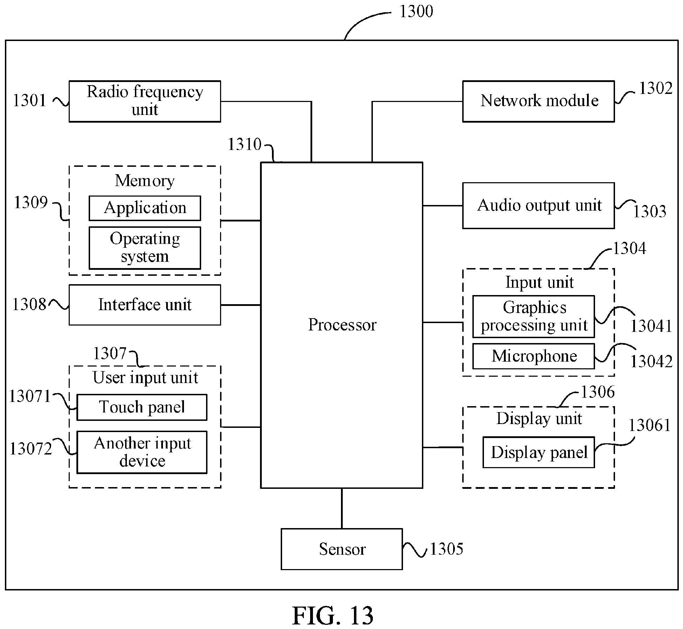

Optionally, the sensing measurement apparatus 1100 further includes:
a fourth determining module, configured to determine the Doppler frequency corresponding to the dynamic reflection path from the Doppler spectrum measured by the sensing node based on a power change feature of a Doppler spectrum peak/Doppler path.
Optionally, a movement speed and a movement direction of the to-be-sensed target are determined based on the Doppler frequency of the dynamic reflection path measured by at least two sensing nodes or a length change speed of the dynamic reflection path.
Optionally, the sensing measurement apparatus 1100 further includes:
a second sending module, configured to send the sensing measurement quantity result to a computing node, where the computing node is configured to determine the positioning sensing result according to sensing measurement quantity results of all sensing nodes participating in sensing.
Optionally, the sensing measurement apparatus 1100 further includes:
a third sending module, configured to send a weight to the computing node, where the weight is used for representing a confidence level of the sensing measurement quantity result of the sensing node.
Optionally, the sensing node includes:
a first device and/or a first network-side device in a stationary state, where the first device includes: at least one of a terminal, a small cell, or a wireless sensing device.
The sensing measurement apparatus 1100 in this embodiment of this application may be an electronic device such as an electronic device with an operating system, or may be a component in an electronic device such as an integrated circuit or a chip. The electronic device may be a terminal, or another device different from a terminal, such as a base station, a small cell, or a wireless sensing device. For example, the terminal may include but is not limited to the foregoing listed types of the terminal 11, and is not specifically limited in this embodiment of this application.
The sensing measurement device 1100 provided in this embodiment of this application can implement each process implemented in the method embodiment shown in FIG. 8, and achieve the same technical effect. To avoid repetition, details are not described herein again.
Optionally, as shown in FIG. 12, an embodiment of this application further provides a communication device 1200, including a processor 1201 and a memory 1202, and a program or an instruction runnable on the processor 1201 is stored on the memory 1202. For example, when the communication device 1200 is a terminal, when the program or instruction is executed by the processor 1201, each step of the above sensing measurement method embodiment can be achieved, and the same technical effect can be achieved. When the communication device 1200 is a network-side device, the program or instruction is executable by the processor 1201 to implement the steps of the embodiments of the foregoing sensing measurement method and/or positioning sensing method, and the same technical effects can be achieved, which will not be described in detail herein again to avoid repetition.
An embodiment of this application further provides a terminal, including: a processor and a communication interface. The communication interface is configured to obtain configuration parameter information, send a first signal according to the configuration parameter information, and determine a sensing measurement quantity result based on the first signal that is sent by the communication interface itself and that is reflected by a to-be-sensed target, where a positioning sensing result of the to-be-sensed target is determined based on the sensing measurement quantity result. The terminal embodiment corresponds to the foregoing method embodiment on the sensing node side, and each implementation process and implementation of the foregoing method embodiment is applicable to the terminal embodiment, and can achieve the same technical effect. Specifically, FIG. 13 is a schematic diagram of a hardware structure of a terminal according to an embodiment of this application.

The terminal 1300 includes, but is not limited to at least some components of a radio frequency unit 1301, a network module 1302, an audio output unit 1303, an input unit 1304, a sensor 1305, a display unit 1306, a user input unit 1307, an interface unit 1308, a memory 1309, a processor 1310, and the like.

A person skilled in the art may understand that, the terminal 1300 may further include a power supply (for example, a battery) for supplying power to the components. The power supply may be logically connected to the processor 1310 by using a power management system, thereby implementing functions such as charging, discharging, and power consumption management by using the power management system. A terminal structure shown in FIG. 13 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1304 may include a graphics processing unit (Graphics Processing Unit, GPU) 13041 and a microphone 13042. The graphics processing unit 13041 performs processing on image data of a static picture or a video that is obtained by an image acquisition device (for example, a camera) in a video acquisition mode or an image acquisition mode. The display unit 1306 may include a display panel 13061, for example, a display panel 13061 configured in a form such as a liquid crystal display or an organic light-emitting diode. The user input unit 1307 includes at least one of a touch panel 13071 and another input device 13072. The touch panel 13071 is also referred to as a touchscreen The touch panel 13071 may include two parts: a touch detection apparatus and a touch controller. The another input device 13072 may include, but not limited to, a physical keyboard, a functional key (for example, a volume control key or a switch key), a track ball, a mouse, and a joystick, which are not described herein in detail.

In this embodiment of this application, after receiving downlink data from the network-side device, the radio frequency unit 1301 can transmit the downlink data to the processor 1310 for processing. In addition, the radio frequency unit 1301 can send uplink data to the network-side device. Generally, the radio frequency unit 1301 includes, but is not limited to, an antenna, an amplifier, a transceiver, a coupler, a low noise amplifier, a duplexer, and the like.

The memory 1309 may be configured to store a software program or instruction and various data. The memory 1309 may mainly include a first storage area for storing programs or instructions and a second storage area for storing data. The first storage area may store an operating system, an application or instruction required by at least one function (for example, a voice playing function or an image playing function), and the like. In addition, the memory 1309 may include a volatile memory or a nonvolatile memory, or the memory 1309 may include a volatile memory and a nonvolatile memory, where The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. Volatile memories may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 1309 in this embodiment of this application includes but is not limited to these memories and any other suitable types of memories.

The processor 1310 may include one or more processing units. Optionally, the processor 1310 integrates an application processor and a modem processor. The application processor mainly processes operations related to an operating system, a user interface, an application, and the like. The modem processor mainly processes a wireless communication signal, and is, for example, a baseband processor. It may be understood that the foregoing modem processor may not be integrated into the processor 1310.

The radio frequency unit 1301 is configured to obtain configuration parameter information, and send a first signal according to the configuration parameter information; and

the radio frequency unit 1301 is further configured to determine a sensing measurement quantity result based on the first signal that is sent by the communication interface itself and that is reflected by a to-be-sensed target, where a positioning sensing result of the to-be-sensed target is determined based on the sensing measurement quantity result.

Optionally, the positioning sensing result includes at least one of the following:

an initial position of the to-be-sensed target;

a movement track of the to-be-sensed target;

a movement speed of the to-be-sensed target;

a current position of the to-be-sensed target; and

a future predicted position of the to-be-sensed target.

Optionally, a sensing measurement quantity includes at least one of the following:

a Doppler spectrum;

a Doppler frequency of a dynamic reflection path;

a change speed of a length of a dynamic reflection path;

a complete or partial value of an angle power spectrum APS of the first signal; and

a complete or partial value of an angle delay power spectrum ADPS of the first signal.

Optionally, the processor 1310 is configured to determine the Doppler frequency corresponding to the dynamic reflection path from the Doppler spectrum measured by the sensing node based on a power change feature of a Doppler spectrum peak/Doppler path.

Optionally, a movement speed and a movement direction of the to-be-sensed target are determined based on the Doppler frequency of the dynamic reflection path measured by at least two sensing nodes or a length change speed of the dynamic reflection path.

Optionally, the radio frequency unit 1301 is further configured to send the sensing measurement quantity result to a computing node, where the computing node is configured to determine the positioning sensing result according to sensing measurement quantity results of all sensing nodes participating in sensing.

Optionally, the radio frequency unit 1301 is further configured to send a weight to the computing node, where the weight is used for representing a confidence level of the sensing measurement quantity result of the sensing node.

Optionally, the sensing node includes:

a first device and/or a first network-side device in a stationary state, where the first device includes: at least one of a terminal, a small cell, or a wireless sensing device.

The terminal 1300 provided in this embodiment of this application can implement various processes performed by the sensing measurement device 1100 as shown in FIG. 11, and can achieve the same beneficial effect. To avoid repetition, details are not described herein again.

An embodiment of this application further provides a network-side device, including: a processor and a communication interface.

In an embodiment, when the network-side device is used as a sensing node for sensing measurement, for example, the network-side device is a base station, the communication interface is configured to obtain configuration parameter information, send a first signal according to the configuration parameter information, and determine a sensing measurement quantity result based on the first signal that is sent by the communication interface itself and that is reflected by a to-be-sensed target, where a positioning sensing result of the to-be-sensed target is determined based on the sensing measurement quantity result.

The network-side device embodiment corresponds to the foregoing sensing measurement method embodiment, and each implementation process and implementation of the foregoing method embodiment is applicable to the network-side device embodiment, and can achieve the same technical effect.

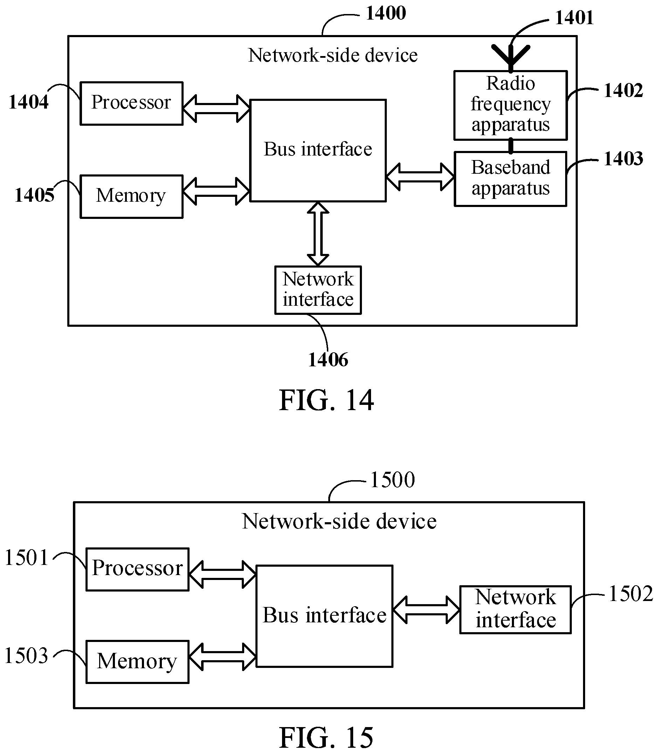

Specifically, an embodiment of this application further provides a network-side device. As shown in FIG. 14, the network-side device 1400 includes: an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information by using the antenna 1401, and sends the received information to the baseband apparatus 1403 for processing. In a downlink direction, the baseband apparatus 1403 processes information to be sent, and sends the information to the radio frequency apparatus 1402. The radio frequency apparatus 1402 processes the received information and sends the information by using the antenna 1401.

The method performed by the network-side device in the foregoing embodiments may be implemented in the baseband apparatus 1403. The baseband apparatus 1403 includes a baseband processor.

The baseband apparatus 1403 may include, for example, at least one baseband plate. A plurality of chips are disposed on the baseband plate. As shown in FIG. 14, one of the plurality of chips is, for example, the baseband processor, and is connected to the memory 1405 through a user interface, to invoke a program in the memory 1405 to perform operations of the network device in the foregoing method embodiments.

The network-side device may further include a network interface 1406. The interface is, for example, a common public radio interface (common public radio interface, CPRI).

Specifically, the network-side device 1400 in this embodiment of the present invention further includes: an instruction or a program stored on the memory 1405 and runnable on the processor 1404. The processor 1404 invokes the instruction or program in the memory 1405 to perform the method performed by the modules shown in FIG. 11, and achieve the same technical effect. To avoid repetition, details are not described herein again.

In another embodiment, when the network-side device is used as a computing node for positioning sensing, for example, the network-side device is a core network device, the communication interface is configured to obtain a sensing measurement quantity result, where the sensing measurement quantity result is obtained by performing, by a sensing node, signal processing on a first signal that is sent by the sensing node itself and that is reflected by a to-be-sensed target, and the processor is configured to determine a positioning sensing result of the to-be-sensed target based on the sensing measurement quantity result.

The network-side device embodiment corresponds to the foregoing positioning sensing method embodiment, and each implementation process and implementation of the foregoing method embodiment is applicable to the network-side device embodiment, and can achieve the same technical effect.

Specifically, an embodiment of this application further provides a network-side device. As shown in FIG. 15, the network-side device 1500 includes: a processor 1501, a network interface 1502 and a memory 1503. The network interface 1502 is, for example, a common public radio interface CPRI.

Specifically, the network-side device 1500 in this embodiment of the present invention further includes: an instruction or a program stored on the memory 1503 and runnable on the processor 1501. The processor 1501 invokes the instruction or program in the memory 1503 to perform the method performed by the modules shown in FIG. 10, and achieve the same technical effect. To avoid repetition, details are not described herein again.

An embodiment of this application further provides a readable storage medium. The readable storage medium stores a program or instructions, and when executed by a processor, the program or instructions implement the processes of the foregoing positioning sensing method or sensing measurement method embodiment, and can achieve the same technical effects. To avoid repetition, details are not described herein again.

The processor is a processor in the terminal described in the foregoing embodiments. The readable storage medium includes a computer-readable storage medium, for example, a computer read-only memory ROM, a random access memory RAM, a magnetic disk, an optical disc, or the like.

An embodiment of this application further provides a chip. The chip includes a processor and a communication interface. The communication interface is coupled to the processor. The processor is configured to run a program or instructions to implement the processes of the positioning sensing method or sensing measurement method embodiment described above, and the same technical effects can be achieved, which will not be described in detail herein again to avoid repetition.

It should be noted that, the chip mentioned in the embodiments of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the foregoing positioning sensing method or sensing measurement method embodiment, and can achieve the same technical effects. To avoid repetition, details are not described herein again.

An embodiment of this application further provides a wireless sensing system, including: a terminal and a network-side device, the terminal can be configured to perform the steps of the sensing measurement method described above, and the network-side device can be configured to perform the steps of the positioning sensing method described above; or the terminal and one part of the network-side device are configured to perform the steps of the sensing measurement method described above, and the other part of the network-side device can be configured to perform the steps of the positioning sensing method described above.

It should be noted that the terms "include", "include", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the range of the method and apparatus in the implementations of this application is not limited to performing functions in the shown or discussed order, and may further include performing functions in a basically simultaneous manner or in reverse order according to the involved functions. For example, the described method may be performed in an order different from the described order, and steps may be further added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions of this application essentially or the part contributing to the conventional technology may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

**Claims**

1. A positioning sensing method, comprising:

   obtaining, by a computing node, a sensing measurement quantity result, wherein the sensing measurement quantity result is obtained by performing, by a sensing node, signal processing on a first signal that is sent by the sensing node itself and that is reflected by a to-be-sensed target; and
   determining, by the computing node, a positioning sensing result of the to-be-sensed target based on the sensing measurement quantity result.

2. The method according to claim 1, wherein before the obtaining, by a computing node, a sensing measurement quantity result, the method further comprises:

   obtaining, by the computing node, first information, wherein the first information comprises: positioning sensing demand information of the to-be-sensed target and position information of the sensing node; and
   determining, by the computing node, the sensing node according to the first information.

3. The method according to claim 2, wherein after the determining, by the computing node, the sensing node according to the first information, the method further comprises:
   sending, by the computing node, configuration parameter information to the sensing node, wherein the first signal sent by the sensing node is determined through the configuration parameter information.

4. The method according to claim 1, wherein the positioning sensing result comprises at least one of the following:

   an initial position of the to-be-sensed target;
   a movement track of the to-be-sensed target;
   a movement speed of the to-be-sensed target;
   a current position of the to-be-sensed target; and
   a future predicted position of the to-be-sensed target.

5. The method according to claim 1, wherein a sensing measurement quantity comprises at least one of the following:

   a Doppler spectrum;
   a Doppler frequency of a dynamic reflection path;
   a change speed of a length of a dynamic reflection path;
   a complete or partial value of an angle power spectrum APS of the first signal; and
   a complete or partial value of an angle delay power spectrum ADPS of the first signal.

6. The method according to claim 5, wherein the determining, by the computing node, a positioning sensing result of the to-be-sensed target based on the sensing measurement quantity result comprises:
   determining, by the computing node, first positioning information of the to-be-sensed target according to a Doppler frequency of a dynamic reflection path measured by each sensing node at least once, wherein the first positioning information comprises at least one of the following: a movement speed magnitude and a movement direction.

7. The method according to claim 6, wherein the method further comprises:

   obtaining, by the computing node, an initial position of the to-be-sensed target; and

the determining, by the computing node, a positioning sensing result of the to-be-sensed target based on the sensing measurement quantity result comprises:

determining, by the computing node, at least one of a current movement track, a current position, and a future predicted position of the to-be-sensed target based on the initial position and the first positioning information.

8. The method according to claim 7, wherein the obtaining, by the computing node, an initial position of the to-be-sensed target comprises:

determining, by the computing node, a search area for the initial position of the to-be-sensed target according to prior information of the to-be-sensed target;
determining, by the computing node, an initial position confidence level of each candidate position of the to-be-sensed target in the search area according to an APS/ADPS result measured at least once and reported by each sensing node, wherein the initial position confidence level represents a possibility that the candidate position is an actual initial position of the to-be-sensed target; and
determining, by the computing node, a candidate position corresponding to an initial position confidence level with a maximum value as the initial position of the to-be-sensed target.

9. The method according to claim 8, wherein the prior information comprises at least one of the following:

an estimated area in which the to-be-sensed target is located and that comes from a third party;
position information of the to-be-sensed target measured by the sensing node for a first time;
a final position of a movement track of the to-be-sensed target measured by a third sensing node for a last time;
map information of an environment in which the to-be-sensed target is located;
an initial position probability map of the to-be-sensed target;
position information of the sensing node participating in sensing; and
an estimation position of the to-be-sensed target determined based on another positioning method.

10. The method according to claim 8, wherein the determining, by the computing node, an initial position confidence level of each candidate position of the to-be-sensed target in the search area according to an APS/ADPS result measured at least once and reported by each sensing node comprises:

determining, by the computing node, an estimation movement track of the to-be-sensed target according to the movement speed magnitude and the movement direction of the to-be-sensed target;
assuming, by the computing node, that the initial position of the to-be-sensed target is a first candidate position in the search area, and determining, based on the first candidate position and the estimation movement track, an angle of arrival and/or an angle of departure of a dynamic reflection path corresponding to each track point on the estimation movement track;
determining, by the computing node, a track position confidence level of each track point of the to-be-sensed target on the estimation movement track according to second information, wherein the second information comprises: the angle of arrival and/or the angle of departure of the dynamic reflection path corresponding to each track point on the estimation movement track, and an APS/ADPS that is measured by the sensing node; and
determining, by the computing node, an initial position confidence level corresponding to the first candidate position according to a position confidence level corresponding to each track point on the estimation movement track.

11. The method according to claim 10, wherein the APS/ADPS result measured and reported by the sensing node comprises any one of the following:

a complete APS/ADPS measured by the sensing node;
a partial APS/ADPS corresponding to a reflection path spectrum peak measured by the sensing node; and
an APS/ADPS value that corresponds to target angle of arrival/angle of departure information indicated by the sensing network element and that is measured by the sensing node.

12. The method according to claim 10, wherein in a case that the quantity of sensing nodes is greater than 1, the method further comprises:

obtaining, by the computing node, a weight of each sensing node, wherein the weight is used for representing a measurement quantity result confidence level of the corresponding sensing node; and

the second information further comprises: the weight of each sensing node; and the track position confidence level is positively correlated with a first value of each sensing node, and the first value is a product of the weight of the corresponding sensing node and an APS/ADPS value.

13. The method according to claim 2, wherein the positioning sensing demand information comprises at least one of the following:
a sensing area, a to-be-sensed target type, a to-be-sensed target identifier, quality of service QoS information, the minimum quantity of sensing nodes, the quantity and density of to-be-sensed targets in a sensing area, a sensing result feedback manner, a positioning sensing start condition, and a positioning sensing end condition.

14. The method according to claim 13, wherein the positioning sensing start condition comprises at least one of the following:

an initiator of the positioning sensing demand information initiates a sensing service start request;
the to-be-sensed target reaches a preset geographic area;
historical position information of the to-be-sensed target is obtained through another positioning method; and
a preset start time of a sensing service corresponding to the positioning sensing demand information is reached; and/or
the positioning sensing end condition comprises at least one of the following:

an initiator of the positioning sensing demand information initiates a sensing service stop request;
a prescribed time for a sensing service is reached;
a predetermined quantity of measurement times for a sensing service is reached;
the to-be-sensed target stops moving, and a stop time reaches a preset time threshold;
the to-be-sensed target reaches or leaves a preset geographic area; and
a sensing node participating in collaborative sensing is unable to continue to provide a collaborative sensing service, and none of sensing nodes in the sensing area satisfies a corresponding collaborative sensing condition.

15. The method according to claim 2, wherein the determining, by the computing node, the sensing node according to the first information comprises:
allocating, by the computing node, the sensing node participating in collaborative sensing to the to-be-sensed target from determined sensing nodes participating in a collaborative sensing service.

16. The method according to claim 15, wherein the allocating, by the computing node, the sensing node participating in collaborative sensing to the to-be-sensed target from determined sensing nodes participating in a collaborative sensing service comprises:

allocating, by the computing node, a corresponding sensing node to each sensing sub-area, wherein the sensing sub-areas are areas with smaller physical ranges obtained by dividing a sensing area; and
determining, by the computing node, that the sensing nodes comprise a sensing node corresponding to a sensing sub-area in which the to-be-sensed target is located.

17. The method according to claim 16, wherein the sensing sub-areas comprise: network-side device sensing sub-areas and terminal sensing sub-areas, wherein at least one network-side device is allocated to one of the network-side device sensing sub-areas, at least one terminal is allocated to one of the terminal sensing sub-areas, and one of the network-side device sensing sub-areas covers at least one of the terminal sensing sub-areas; and
the method further comprises:
associating, by the computing node, a network-side device allocated to one of the network-side device sensing sub-areas with a terminal allocated to at least one of the terminal sensing sub-areas.

18. The method according to claim 16, wherein the method further comprises:

updating, by the computing node, the sensing node participating in collaborative sensing for the to-be-sensed target, wherein
the updating the sensing node participating in collaborative sensing comprises at least one of the following:
adding a terminal, changing a terminal, deleting a terminal, adding a network-side device, changing a network-side device, and deleting a network-side device.

**19.** The method according to claim 18, wherein the updating, by the computing node, the sensing node participating in collaborative sensing for the to-be-sensed target comprises at least one of the following:

updating, by the computing node, a network-side device participating in collaborative sensing for the to-be-sensed target under a first condition; and
updating, by the computing node, a terminal participating in collaborative sensing for the to-be-sensed target under a second condition.

**20.** The method according to claim 19, wherein the first condition comprises at least one of the following:

it is determined based on a track of the to-be-sensed target that the to-be-sensed target is about to leave or has left a sensing sub-area corresponding to a network-side device;
it is determined based on a track of the to-be-sensed target that a distance between the to-be-sensed target and at least one network-side device participating in collaborative sensing exceeds a maximum sensing distance of a corresponding device and remaining network-side devices participating in collaborative sensing are not sufficient to provide a sensing result satisfying preset sensing quality of service QoS;
a first measurement quantity result reported by a network-side device is less than a preset threshold, and the first measurement quantity result comprises a Doppler frequency in the sensing measurement quantity result;
a first measurement quantity result reported by a terminal associated with a network-side device is less than a preset threshold;
a second measurement quantity result reported by a network-side device is less than a preset threshold, and the second measurement quantity result comprises an APS in the sensing measurement quantity result;
a second measurement quantity result reported by a terminal associated with a network-side device is less than a preset threshold; and
it is determined based on a track of the to-be-sensed target that a span of a physical range of the track of the to-be-sensed target exceeds a preset threshold;
and/or
the second condition comprises at least one of the following:

it is determined based on a track of the to-be-sensed target that the to-be-sensed target is about to leave or has left a sensing sub-area corresponding to a terminal;
it is determined based on a track of the to-be-sensed target that a distance between the to-be-sensed target and at least one terminal participating in collaborative sensing exceeds a maximum sensing distance of a corresponding terminal and remaining terminals participating in collaborative sensing are not sufficient to provide a sensing result satisfying preset sensing QoS;
a first measurement quantity result reported by a terminal is less than a preset threshold, and the first measurement quantity result comprises a Doppler frequency in the sensing measurement quantity result;
a second measurement quantity result reported by a terminal is less than a preset threshold, and the second measurement quantity result comprises an APS in the sensing measurement quantity result;
it is determined based on a track of the to-be-sensed target that a span of a physical range of the track of the to-be-sensed target exceeds a preset threshold; and
switching between network-side devices participating in sensing is triggered.

**21.** The method according to claim 2, wherein the first information further comprises state information of the sensing node.

**22.** The method according to claim 21, wherein the state information comprises at least one of the following:
sensing capability indication information, antenna orientation and tilt information, beamforming configuration information, position information, a determining method for the position information, a movement state indication, a communication state indication, and a sensing state indication.

**23.** A positioning sensing apparatus, applied to a computing node, wherein the positioning sensing apparatus comprises:

a first obtaining module, configured to obtain a sensing measurement quantity result, wherein the sensing measurement quantity result is obtained by performing, by a sensing node, signal processing on a first signal that is sent by the sensing node itself and that is reflected by a to-be-sensed target; and
a first determining module, configured to determine a positioning sensing result of the to-be-sensed target based on the sensing measurement quantity result.

**24.** The apparatus according to claim 23, further comprising:

a second obtaining module, configured to obtain first information, wherein the first information comprises: positioning sensing demand information of the to-be-sensed target and position information of the sensing node; and

a second determining module, configured to determine the sensing node according to the first information.

**25.** The apparatus according to claim 23, wherein the positioning sensing result comprises at least one of the following:

an initial position of the to-be-sensed target;
a movement track of the to-be-sensed target;
a movement speed of the to-be-sensed target;
a current position of the to-be-sensed target; and
a future predicted position of the to-be-sensed target.

**26.** The apparatus according to claim 23, wherein a sensing measurement quantity comprises at least one of the following:

a Doppler spectrum;
a Doppler frequency of a dynamic reflection path;
a change speed of a length of a dynamic reflection path;
a complete or partial value of an angle power spectrum APS of the first signal; and
a complete or partial value of an angle delay power spectrum ADPS of the first signal.

**27.** The apparatus according to claim 26, wherein the first determining module is specifically configured to:
determine first positioning information of the to-be-sensed target according to a Doppler frequency of a dynamic reflection path measured by each sensing node at least once, wherein the first positioning information comprises at least one of the following: a movement speed magnitude and a movement direction.

**28.** The apparatus according to claim 27, wherein the method further comprises:

a third obtaining module, configured to obtain an initial position of the to-be-sensed target, wherein
the first determining module is specifically configured to:
determine at least one of a current movement track, a current position, and a future predicted position of the to-be-sensed target based on the initial position and the first positioning information.

**29.** A sensing measurement method, comprising:

obtaining, by a sensing node, configuration parameter information;
sending, by the sensing node, a first signal according to the configuration parameter information; and
determining, by the sensing node, a sensing measurement quantity result based on the first signal that is sent by the sensing node itself and that is reflected by a to-be-sensed target, wherein a positioning sensing result of the to-be-sensed target is determined based on the sensing measurement quantity result.

**30.** The method according to claim 29, wherein the positioning sensing result comprises at least one of the following:

an initial position of the to-be-sensed target;
a movement track of the to-be-sensed target;
a movement speed of the to-be-sensed target;
a current position of the to-be-sensed target; and
a future predicted position of the to-be-sensed target.

**31.** The method according to claim 29, wherein a sensing measurement quantity comprises at least one of the following:

a Doppler spectrum;
a Doppler frequency of a dynamic reflection path;
a change speed of a length of a dynamic reflection path;
a complete or partial value of an angle power spectrum APS of the first signal; and
a complete or partial value of an angle delay power spectrum ADPS of the first signal.

**32.** The method according to claim 31, wherein the method further comprises:
determining, by the sensing node, the Doppler frequency corresponding to the dynamic reflection path from the Doppler spectrum measured by the sensing node based on a power change feature of a Doppler spectrum peak/Doppler path.

**33.** The method according to claim 31 or 32, wherein a movement speed and a movement direction of the to-be-sensed target are determined based on the Doppler frequency of the dynamic reflection path measured by at least two sensing nodes or a length change speed of the dynamic reflection path.

**34.** The method according to any one of claims 29 to 33, wherein the method further comprises:
sending, by the sensing node, the sensing measurement quantity result to a computing node, wherein the computing node is configured to determine the positioning sensing result according to sensing measurement quantity results of all sensing nodes participating in sensing.

**35.** The method according to claim 34, wherein the method further comprises:
sending, by the sensing node, a weight to the computing node, wherein the weight is used for representing a confidence level of the sensing measurement quantity result of the sensing node.

**36.** A sensing measurement apparatus, applied to a sensing node, wherein the sensing measurement apparatus comprises:

a fourth obtaining module, configured to obtain configuration parameter information;
a first sending module, configured to send a first signal according to the configuration parameter information; and
a third determining module, configured to determine a sensing measurement quantity result based on the first signal that is sent by the first sending module itself and that is reflected by a to-be-sensed target, wherein a positioning sensing result of the to-be-sensed target is determined based on the sensing measurement quantity result.

**37.** The apparatus according to claim 36, wherein the positioning sensing result comprises at least one of the following:

an initial position of the to-be-sensed target;
a movement track of the to-be-sensed target;
a movement speed of the to-be-sensed target;
a current position of the to-be-sensed target; and
a future predicted position of the to-be-sensed target.

**38.** The apparatus according to claim 36, wherein the sensing measurement quantity result comprises at least one of the following:

a Doppler spectrum;
a Doppler frequency of a dynamic reflection path;
a change speed of a length of a dynamic reflection path;
a complete or partial value of an angle power spectrum APS of the first signal; and
a complete or partial value of an angle delay power spectrum ADPS of the first signal.

**39.** The apparatus according to any one of claims 36 to 38, further comprising:
a second sending module, configured to send the sensing measurement quantity result to a computing node, wherein the computing node is configured to determine the positioning sensing result according to sensing measurement quantity results of all sensing nodes participating in sensing.

**40.** The apparatus according to claim 39, wherein the method further comprises:
a third sending module, configured to send a weight to the computing node, wherein the weight is used for representing a confidence level of the sensing measurement quantity result of the sensing node.

**41.** A terminal, comprising a processor and a memory, wherein the memory stores a program or instructions runnable on the processor, and when being executed by the processor, the program or the instructions implement the steps of the sensing measurement method according to any one of claims 29 to 35.

**42.** A network-side device, comprising a processor and a memory, wherein the memory stores a program or instructions runnable on the processor, and when being executed by the processor, the program or the instructions implement the steps of the positioning sensing method according to any one of claims 1 to 22 or implement the steps of the sensing measurement method according to any one of claims 29 to 35.

**43.** A readable storage medium, storing a program or instructions, wherein the program or the instructions, when being executed by a processor, implement the steps of the positioning sensing method according to any one of claims 1 to 22 or implement the steps of the sensing measurement method according to any one of claims 29 to 35.

FIG. 1

FIG. 2

NG-C  Xn-C

gNB

gNB-CU

F1-C  F1-C

gNB-DU  gNB-DU

TP  RP  TP  RP

TRP  TRP

NR-Uu  NR-Uu

FIG. 3

A computing node obtains a sensing measurement quantity result, where the sensing measurement quantity result is obtained by performing, by a sensing node, signal processing on a first signal that is sent by the sensing node itself and that is reflected by a to-be-sensed target
401

The computing node determines a positioning sensing result of the to-be-sensed target based on the sensing measurement quantity result
402

FIG. 4

FIG. 5

Base station

$\varphi_0$

$(x_0, y_0)$

To-be-sensed target 1

$(x_1, y_1)$

UE

$\varphi_1$

$(x_{person}, y_{person})$

Notes:

Single-section multipath radial speed $v_{path\,0,\,1}$

Single-section multipath tangential speed $v'_{path\,0,\,1}$

Pedestrian movement speed $v_{person}$

$v_{path1}$
$v'_{path0}$

$v_{path0}$
$v'_{path1}$

$v_{person}$

FIG. 6

EP 4 456 625 A1

FIG. 7

Base station 1

(UE) Sensing sub-area 3

Small cell / dedicated sensing node

UE group 2

To-be-sensed target 2

Sensing terminal UE 4

Sensing terminal UE 3

To-be-sensed target 3

UE group 3

Sensing terminal UE 5

To-be-sensed target 1

Sensing terminal UE 1

Sensing terminal UE 2

UE group 1

(UE) Sensing sub-area 1

(UE) Sensing sub-area 2

Base station 2

Sensing area

FIG. 8

```
┌─────────────────────────────────────────────────────────────┐
│                                                             │ ─ 901
│   A sensing node obtains configuration parameter information │
│                                                             │
└─────────────────────────────────────────────────────────────┘
                              │
                              ▼
┌─────────────────────────────────────────────────────────────┐
│                                                             │ ─ 902
│      The sensing node sends a first signal according to the │
│              configuration parameter information            │
└─────────────────────────────────────────────────────────────┘
                              │
                              ▼
┌─────────────────────────────────────────────────────────────┐
│   The sensing node determines a sensing measurement quantity │
│   result based on the first signal that is sent by the sensing node │ ─ 903
│   itself and that is reflected by a to-be-sensed target, where a │
│   positioning sensing result of the to-be-sensed target is determined │
│      based on the sensing measurement quantity result       │
└─────────────────────────────────────────────────────────────┘
```

## FIG. 9

```
                    ─ 1000
          ┌─────────────────────────┐
          │   Positioning sensing   │
          │       apparatus         │
          │                         │ ─ 1001
          │   ┌─────────────────┐   │
          │   │ First obtaining │   │
          │   │     module      │   │
          │   └─────────────────┘   │
          │            │            │ ─ 1002
          │   ┌─────────────────┐   │
          │   │ First determining│   │
          │   │     module      │   │
          │   └─────────────────┘   │
          └─────────────────────────┘
```

## FIG. 10

1110

Sensing measurement apparatus

1101
Fourth obtaining module

1102
First sending module

1103
Third determining module

FIG. 11

1200

Communication device

1201 Processor

1202 Memory

FIG. 12

1300

FIG. 13

1400

1401

Network-side device

1404 — Processor

Bus interface

1401 — Radio frequency apparatus — 1402

Baseband apparatus — 1403

1405 — Memory

Network interface

1406

## FIG. 14

1500

Network-side device

1501 — Processor

Bus interface

Network interface — 1502

1503 — Memory

## FIG. 15

**INTERNATIONAL SEARCH REPORT**

| International application No. |
| --- |
| **PCT/CN2022/140654** |

**A.    CLASSIFICATION OF SUBJECT MATTER**

H04W64/00(2009.01)i

According to International Patent Classification (IPC) or to both national classification and IPC

**B.    FIELDS SEARCHED**

Minimum documentation searched (classification system followed by classification symbols)

IPC:  H04W

Documentation searched other than minimum documentation to the extent that such documents are included in the fields searched

Electronic data base consulted during the international search (name of data base and, where practicable, search terms used)

3GPP, CNTXT, ENTXTC, baidu: 位置, 定位, 通感一体化, 感知移动网络, 感知, 回波, 反射, 测量, location, position, ISAC, PMNs, sens+, echo, reflect+, measur+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113056000 A (BEIJING UNIVERSITY OF POSTS AND TELECOMMUNICATIONS) 29 June 2021 (2021-06-29) description, paragraphs 53-165 | 1-43 |
| A | CN 107872818 A (ZTE CORP.) 03 April 2018 (2018-04-03) entire document | 1-43 |
| A | CN 109565497 A (HUAWEI TECHNOLOGIES CO., LTD.) 02 April 2019 (2019-04-02) entire document | 1-43 |
| A | EP 3399328 A1 (THALES SA) 07 November 2018 (2018-11-07) entire document | 1-43 |
| X | IMT-2030 (6G) 推进组 (IMT-2030 (6G) Promotion Group). "通信感知一体化技术研究报告 (Non-official Translation: Research Report on Communication-aware Integration Technology)" URL: https://max.book118.com/html/2021/0917/8141126071004005.shtm, 18 September 2021 (2021-09-18), sections 1.2, 2.3, 3.1, and 4 | 1-43 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 February 2023** | **28 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

EP 4 456 625 A1

**INTERNATIONAL SEARCH REPORT**

| International application No. |
| --- |
| **PCT/CN2022/140654** |

**C.     DOCUMENTS CONSIDERED TO BE RELEVANT**

| Category* | Citation of document, with indication, where appropriate, of the relevant passages | Relevant to claim No. |
| --- | --- | --- |
| PX | IMT-2030 (6G) 推进组 (IMT-2030 (6G) Promotion Group). "通信感知一体化技术研究报告 (2022) (Non-official Translation: Research Report on Communication-aware Integration Technology (2022))"<br>*URL: https://max.book118.com/html/2022/1127/8066047135005015.shtm,*<br>30 November 2022 (2022-11-30),<br>sections 1.2, 2.3, 3.1, and 4 | 1-43 |

Form PCT/ISA/210 (second sheet) (July 2022)

INTERNATIONAL SEARCH REPORT
Information on patent family members

International application No.

**PCT/CN2022/140654**

| Patent document cited in search report | | | Publication date (day/month/year) | Patent family member(s) | | | Publication date (day/month/year) |
|---|---|---|---|---|---|---|---|
| CN | 113056000 | A | 29 June 2021 | None | | | |
| CN | 107872818 | A | 03 April 2018 | US | 2021298046 | A1 | 23 September 2021 |
| | | | | US | 11516825 | B2 | 29 November 2022 |
| | | | | WO | 2018059230 | A1 | 05 April 2018 |
| CN | 109565497 | A | 02 April 2019 | WO | 2018058374 | A1 | 05 April 2018 |
| | | | | EP | 3503490 | A1 | 26 June 2019 |
| | | | | EP | 3503490 | A4 | 21 August 2019 |
| | | | | US | 2019219688 | A1 | 18 July 2019 |
| EP | 3399328 | A1 | 07 November 2018 | EP | 3399328 | B1 | 22 January 2020 |
| | | | | SG | 10201803714 | UA | 28 December 2018 |
| | | | | ES | 2795274 | T3 | 23 November 2020 |
| | | | | FR | 3066026 | A1 | 09 November 2018 |
| | | | | FR | 3066026 | B1 | 27 March 2020 |
| | | | | PL | 3399328 | T3 | 13 July 2020 |
| | | | | IN | 201814016980 | A | 09 November 2018 |

Form PCT/ISA/210 (patent family annex) (July 2022)

**REFERENCES CITED IN THE DESCRIPTION**

**Patent documents cited in the description**

- CN 202111600081